Europäisches Patentamt

European Patent Office

Office européen des brevets

(19)

(11) EP 0 391 278 B1

(12) **EUROPEAN PATENT SPECIFICATION**

(45) Date of publication and mention
of the grant of the patent:
**15.10.1997 Bulletin 1997/42**

(51) Int Cl.⁶: **G01S 17/58**, G01S 7/48

(21) Application number: **90106169.7**

(22) Date of filing: **30.03.1990**

(54) **Doppler velocity meter**

Doppler-Geschwindigkeitsmesser

Vélocimètre à effet doppler

(84) Designated Contracting States:
**BE CH DE ES FR GB IT LI NL SE**

(30) Priority: **31.03.1989 JP 83208/89**
**02.02.1990 JP 23786/90**
**09.02.1990 JP 30644/90**
**16.02.1990 JP 35274/90**
**16.02.1990 JP 35275/90**

(43) Date of publication of application:
**10.10.1990 Bulletin 1990/41**

(73) Proprietor: **CANON KABUSHIKI KAISHA**
**Tokyo (JP)**

(72) Inventors:
- **Hidejiro, Kadowaki**
  **Yokohama-shi, Kanagawa-ken (JP)**
- **Tsuchii, Ken**
  **Setagaya-ku, Tokyo (JP)**
- **Takamiya, Makoto**
  **Kawasaki-shi, Kanagawa-ken (JP)**
- **Yamamoto, Kosuke**
  **Yokohama-shi, Kanagawa-ken (JP)**
- **Wataya, Masafumi**
  **Kawasaki-shi, Kanagawa-ken (JP)**
- **Yanaka, Toshiyuki**
  **Setagaya-ku, Tokyo (JP)**
- **Takahashi, Haruhiko**
  **Yokohama-shi, Kanagawa-ken (JP)**
- **Sugiyama, Hiroshi,**
  **Yokohama-shi Kanagawa-ken (JP)**
- **Ishida, Yasuhiko,**
  **Meguro-ku, Tokyo (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
EP-A- 0 127 244     EP-A- 0 226 878
EP-A- 0 302 444     US-A- 4 948 257

- TECHNISCHES MESSEN ATM. vol. 54, no. 7-8,
  1987, MUNCHEN DE pages 291 - 303; D.
  DOPHEIDE et al.: "Laser- und Avalanche Dioden
  für die Geschwindigkeitsmessung mit
  Laser-Doppler Anemometrie"

**Description**

The present invention relates to a velocity meter capable of measuring velocity of a moving object or a flowing fluid in a non-contact manner. More particularly, the present invention is concerned with a Doppler velocity meter which applies a laser beam to a moving object or fluid and measures the velocity by sensing a shift in the frequency of the laser beam.

Hitherto, a laser Doppler velocity meter has been known and used which is capable of measuring the moving velocity of an object or a fluid in a non-contact manner and with a high degree of precision. Briefly, a laser Doppler velocity meter is a device which measures the velocity of a moving object or a flowing fluid by making use of a phenomenon called Doppler effect, i.e., a phenomenon in which the frequency of a laser beam scattered by the object or fluid is shifted from the frequency of the laser beam applied to the object or the fluid in an amount which is proportional to the velocity of the moving object or the fluid.

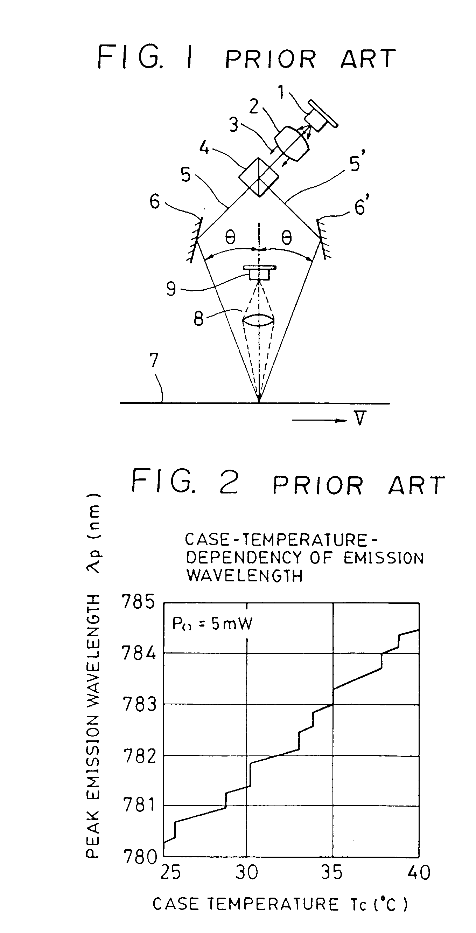

Referring to Fig. 1, a known laser Doppler velocity meter has, as its major components, a laser 1, a collimator lens 2, a parallel light beam 3, a beam splitter 4, reflective mirrors 6, 6', a condenser lens 8 and a photo-detector 9. Numeral 7 denotes an object or a fluid moving at a velocity V in the direction of an arrow.

A laser beam emitted from a laser 1 is changed by a collimator lens 2 into a collimated light beam 3 which is then split into two light beams 5 and 5' by a beam splitter 4. These light beams 5, 5' are reflected by the reflective mirrors 5, 5' and are applied to the object or fluid 7 moving at the velocity V at an incident angle represented by θ. The lights reflected and scattered by the object or the fluid 7 are detected by the photo-detector 9 through the condenser lens 8. The frequencies of the scattered lights are respectively Doppler-shifted in amounts of $+\Delta f$ and $-\Delta f$ which are proportional to the moving velocity V. Representing the wavelength of the laser beam by λ, the amount $\Delta f$ of frequency shift is expressed by the following formula (1).

$$\Delta f = V \sin 8/\lambda \tag{1}$$

The scattered lights the frequencies of which have been shifted in amounts of $+\Delta f$ and $-\Delta f$, respectively, interfere with each other so as to cause a periodic change of brightness on the light-receiving surface of the photo-detector 9. The frequency F of the above-mentioned periodic change in the brightness is given by the following formula (2).

$$F = 2\Delta f = 2V \sin 8/\lambda \tag{2}$$

It is therefore possible to determine the velocity of he moving object or the flowing fluid 7 in accordance with formula (2) above, by measuring the frequency output from the photo-detector 9.

In order to obtain a compact laser Doppler velocity meter, it is preferred to use a semiconductor laser such as a laser diode rather than a gas laser such as He-Ne laser as the light source. In general, however, the emission wavelength of semiconductor laser is not so stable as that of a gas laser, and undesirably changes depending on temperature. Since the Doppler frequency F depends on the wavelength λ of the laser beam as will be seen from formula (2) above, the precision of detection of the moving velocity of the object or fluid is undesirably impaired by a fluctuation in the wavelength λ of the laser beam.

Fig. 2 is a graph showing temperature-dependency of emission wavelength of a commercially-available laser diode extracted from the Mitsubishi Semiconductor Data Book, 1987, Edition for Photo-semiconductor Devices). In this Figure, linear portions of the curve are caused mainly by a change in the refractive index of the active layer of the laser diode due to a change in temperature. The rate of change in the wavelength is about 0.05 to 0.06 nm/°C. On the other hand, non-linear change in the emission wavelength is attributed to a phenomenon known as "longitudinal mode hopping", in which the wavelength varies at a large rate of 0.2 to 0.3 nm/°C.

Thus, the emission wavelength of the laser diode is quite unstable. When this type of laser is used as the light source of a laser Doppler velocity meter, it is necessary to mount, together with the laser diode, a temperature control unit which is composed of, for example, a heater, a heat radiator and a temperature sensor. The use of such a temperature control unit undesirably increases the size of the velocity meter and raises the cost uneconomically.

It is also to be noted that the longitudinal mode hopping is caused also by a reason other than a temperature change. It is impossible to completely suppress a fluctuation in the emission wavelength of a laser diode even when a temperature control unit is used together with the laser diode.

Moreover, document EP-A-0 127 244 discloses a method of measuring the velocity and/or the length of moving objects and, according to the preamble of claim 1, an arrangement for performing this method. In this known method and arrangement, a constant Doppler frequency shift is generated by pre-shifting or varying the frequency of the laser beam output by a laser beam source and directed towards the object by means of a rotating grating which is correspondingly controlled at a variable speed. Here, the laser beam projects linearly from the laser beam source through the rotating transmissive grating and a lens arrangement to the object to be measured, so that a large mount assembly is required.

It is therefore the object of the present invention to provide a laser Doppler velocity meter having a compact size and being capable of precisely detecting the velocity of a moving object or a fluid regardless of any change in the wavelength of the emitted laser beam.

According to the present invention, this object is accomplished by a laser Doppler velocity meter as defined in claim 1 and as applied to an image recording apparatus as defined in claim 6.

The velocity meter according to the invention can make use of a laser and a laser beam as the emission source and the emitted beam. In such a case, in order to realize a compact velocity meter, a semiconductor laser is preferably used as the laser. The invention, however, can be carried out with other stable or unstable emission sources and beams.

In a preferred form of the present invention, the velocity meter is constructed such that the emitted beam is constantly aimed at a predetermined location regardless of any change in the wavelength of the beam. For instance, the optical system may be arranged such that the position at which first and second diffracted beams cross each other is substantially unchanged. This arrangement makes it possible to maintain the measuring sensitivity substantially constant, thus enabling a stable measurement of the velocity. Such an optical system can be obtained by arranging the diffraction grating and the object substantially in an optically conjugate relation to each other, by utilizing lens assemblies in the optical system, incorporating a plurality of diffraction gratings in parallel or by suitably disposing various optical components such as mirrors.

In a preferred form of the present invention, the emitted beam is applied to the object substantially in the form of a collimated beam. Such an application of the beam can be effected not only by directing a previously collimated beam to the object but also by condensing the beam onto the object or its vicinity so as to irradiate the object with a beam which approximates a collimated beam.

In another preferred form of the invention, the emitted beam is diffracted by a diffraction grating and at least one of the diffracted beams is directed to the object. Various types of grating are usable such as amplitude-type diffraction gratings and phase-type diffraction gratings. Diffraction gratings of relief type, which are easy to mass-produce, can be used effectively in the invention. Such diffraction gratings may be of the type which diffracts the incident beam while reflecting the same.

In the velocity meter of the present invention, the diffraction grating is used for the purpose of changing the incident angle of the emitted beam to the object in accordance with a change in the wavelength of the emitted beam. It is possible to modulate the frequency of the signal from the detector by adding a mechanism which is capable of moving the diffraction grating at a constant velocity in the direction of arrangement of the diffraction grating. Such a modulation enables discrimination of the direction of movement of the object, as well as precise detection of the velocity of the object which is moving at low velocity.

The detecting means used in the velocity meter of the present invention may be arranged to detect either the light transmission-scattered by the object or reflection-scattered by the same. When the diffraction grating is of the type which reflects, diffracts and deflects the emitted beam, it is advisable that the detecting means is of the type capable of detecting the reflection-scattered light, so that the emission source, e.g., a semiconductor laser,and a detector, e. g., a photodetector, can be installed in the space between the diffraction grating and the object, thus contributing to a reduction in the size of the velocity meter.

It is also preferred that the detector is so arranged that its converter for converting the scattered beam into a signal is positioned substantially in an optically conjugate manner to the object. Such an arrangement enables the beam scattered by the object to be efficiently incident to the converter, thus attaining a high S/N ratio.

According to the present invention, it is thus possible to obtain a compact velocity meter by employing a semiconductor laser as an emission source. Such a compact velocity meter can conveniently be incorporated in an apparatus such as a facsimile, printer or the like, thus realizing an improved apparatus. This specification discloses some improved apparatus of the kind described. One of the most preferred examples of such apparatus is an image recording apparatus as defined in claim 6. Such an apparatus may comprise a conveyor means for conveying a recording medium such as a paper sheet, recording means for recording an image on the recording medium, and a velocity meter for detecting the velocity of the recording medium which is being conveyed by the conveyor means, wherein the velocity meter is capable of applying an emitted beam to a selected portion of the conveyor means, detecting a scattered beam generated at such a portion of the conveyor means, and outputting a signal which is indicative of the conveying velocity and which corresponds to the frequency of the scattered beam; wherein the angle of incidence of the emitted beam to the preselected portion of the conveyor means is varied in accordance with a change in the wavelength so as to substantially compensate for a change in the frequency caused by a change in the wavelength of the emitted beam.

The velocity meter of the present invention also can be mounted on various other types of apparatus. Although many types of velocity meter of the invention are described herein, it will be obvious to those skilled in the art to form various other velocity meters than those disclosed, within the scope of the present invention.

Other objects, features and advantages of the present invention will become clear from the following description of the preferred embodiments when the same is read in conjunction with the accompanying drawings.

Fig. 1 is a schematic illustration of a known laser Doppler velocity meter;

Fig. 2 is a graph illustrating an example of temperature-dependency of emission wavelength of a laser diode;

Figs. 3 and 4 are illustrations explanatory of the principle of velocity detection performed by a laser Doppler velocity meter ;

Fig. 5 is a schematic illustration of a first embodiment of the velocity meter of the present invention;

Figs. 6(a) to 6(c) are illustrations of the relationship between the wavelength of a laser beam and two spots formed on an object;

Fig. 7 is an illustration of the angle of incidence of a laser beam onto a diffraction grating and the Doppler frequency;

Fig. 8 is an illustration of the relationship between the inclination of a diffraction grating and the Doppler frequency;

Fig. 9 is a graph showing the relationship between the wavelength of a laser beam and the Doppler frequency as obtained when the inclination of the diffraction grating is used as a parameter;

Figs. 10A and 10B are schematic illustrations of a second embodiment of the velocity meter of the present invention;

Fig. 11 is an illustration of the manner in which a laser beam is applied obliquely to a diffraction grating;

Fig. 12 is a schematic illustration of a third embodiment of the velocity meter in accordance with the present invention;

Fig. 13 is a schematic illustration of a fourth embodiment of the velocity meter in accordance with the present invention;

Fig. 14 is an illustration of a method for effecting frequency modulation by movement of a diffraction grating;

Fig. 15 is a graph showing the relationship between the velocity of an object and Doppler frequency;

Fig. 16 is a schematic illustration of a fifth embodiment of the velocity meter in accordance with the present invention;

Fig. 17 is a schematic illustration of a sixth embodiment of the velocity meter in accordance with the present invention;

Fig. 18 is a block diagram of a circuit for receiving an output signal from a photodetector;

Figs. 19 to 21 are schematic illustrations of a seventh embodiment of the velocity meter of the present invention;

Fig. 22 is a schematic illustration of an example of a laser Doppler velocity meter designed for measuring fluid velocity.

Fig. 23 is a graph showing the relationship between a change in the wavelength of a laser beam and a change in the Doppler effect;

Fig. 24 is a fragmentary schematic illustration of an eight embodiment developed by modification of the velocity meter example shown in Fig. 22; and

Figs. 25, 26 and 27 are schematic illustrations of different image recording apparatus incorporating velocity meters embodying the present invention.

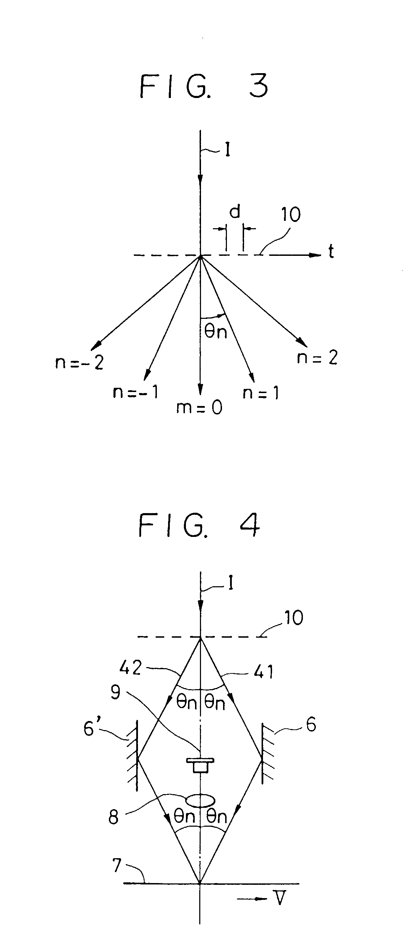

Figs. 3 and 4 are illustrations of the principle of a velocity meter of the present invention.

Fig. 3 illustrates the state of diffraction of a laser beam I having a wavelength $\lambda$ when the light beam is made incident to a transmission-type diffraction grating 10 of a pitch d, as observed when the laser beam I impinges in a direction perpendicular to the direction t of the grating 10. The diffraction angles $\theta$ of diffracted light beams of the respective orders generated by the diffraction grating 10 are expressed by the following formula.

$$\sin \theta = \pm m/\lambda d \qquad (3)$$

(m = 0, 1, 2,...)

Therefore, the diffraction angles $\theta_n$ of the diffracted lights of $\pm n$ th orders other than the order 0 (m = 0) are expressed by the following formula:

$$\sin \theta_n = \pm n/\lambda d \qquad (4)$$

(n = 1, 2,...)

As will be clear from the formula (4), the diffraction angle $\theta_n$ of the diffracted lights of $\pm n$ th orders depend on the wavelength $\lambda$ of the incident laser beam I so that the angles at which the diffracted lights of $\pm n$ th orders are emitted from the diffraction grating vary according to a change in the wavelength $\lambda$.

Fig. 4 illustrates a laser Doppler velocity meter having the diffraction grating of Fig. 3 incorporated in the optical system thereof. The arrangement shown in Fig. 4 does not form part of the present invention and is materially the same as that of the known device shown in Fig. 1 except that the diffraction grating 10 is provided. Therefore, the same reference numerals are used in Fig. 4 to denote the same components as those in Fig. 1 and detailed description of such components is omitted.

In the optical system shown in Fig. 4, the diffracted lights 41, 42 of the $\pm n$ th orders emitted from the diffraction grating 10 are reflected by parallel mirrors 6, 6' and are made to impinge upon substantially the same point on an object 7 at incident angle $\theta_n$ which is the same as the angles $\pm \theta_n$ of incidence. The reflective mirrors 6, 6' have reflecting surfaces disposed in planes which are perpendicular to the direction of arrangement of the diffraction grating 10 and the direction of movement of the object 7.

The Doppler frequency represented by the output signal from the photo-detector 9 in this state can be expressed by the following formula (5) derived from the aforementioned formulae (2) and (4).

$$F = 2V \sin \theta_n / \lambda = 2nV/d \qquad (5)$$

Thus, the Doppler frequency F does not depend on the wavelength $\lambda$ of the laser beam, but is in inverse proportion to the pitch d of the grating and in proportion both to the number n of the order of the diffracted light and the velocity V of movement of the object 7. Since the pitch d of the diffraction grating 10 is sufficiently stable, the Doppler frequency F depends solely on the velocity V of the object 7, regardless of the wavelength of the laser beam. Therefore, the photo-detector 9 produces an output exactly corresponding to the velocity V of the object 7 regardless of any change in the emission wavelength of the laser which is not shown.

Embodiments of the laser Doppler velocity meter of the present invention, relying upon the principle described above, will be described hereinunder. The following embodiments employ a reflection-type diffraction grating.

It is to be noted, however, that in the following principles underlaying the present invention are explained with reference to transmissive diffraction gratings. Of course, the fundamentals of these explanations hold also true for reflective gratings as employed according to the present invention.

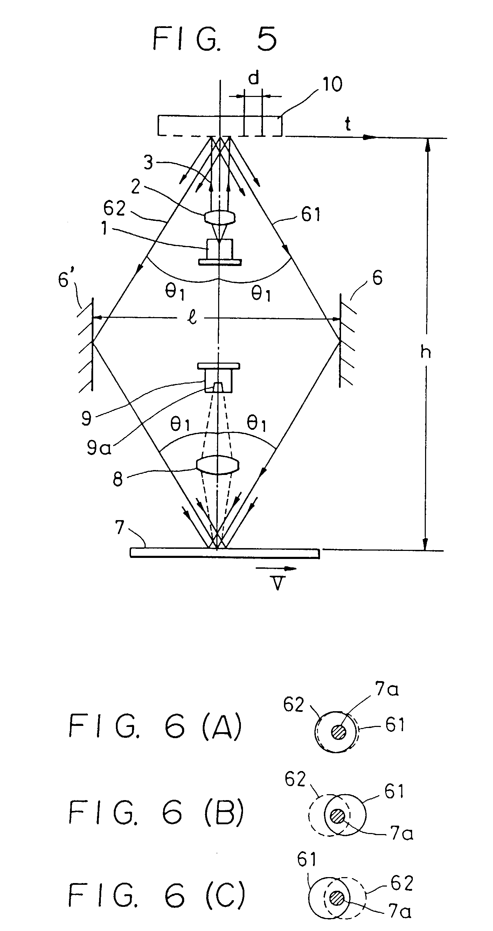

Fig. 5 is a schematic illustration of a first embodiment. In this Figure, the same reference numerals are used to denote the same components as those used in the known device shown in Fig. 1, and detailed description of such parts is omitted.

In the first embodiment, a laser diode 1 capable of emitting a laser beam of a wavelength $\lambda$ of 0.78 $\mu$m is used so as to realize a compact construction. The laser 1 may be a single-mode laser or a multi-mode laser. The diffraction grating 10 is a reflective diffraction grating having a grating pitch d of 1.6 $\mu$m. The diffraction grating 10 can be prepared by periodically forming reflective films of A$\ell$ or Au on the surface of a substrate such as a glass substrate, or periodically forming grooves in the substrate surface and then forming a reflective film on the substrate surface. It is thus possible to use various types of diffraction gratings such as amplitude-type or phase-type (relief type) gratings as the diffraction grating 10.

The laser beam from the laser diode 10 is collimated by the collimator lens 2 into a beam 3 having a diameter of about 3 mm. This collimated light beam 3 is made incident onto the reflection-type diffracted grating 10 in a direction perpendicular to the direction to of disposal of the diffraction grating 10. The diffracted lights 61, 62 of the order of $\pm 1$ generated by the diffraction grating 10 are emitted from the diffraction grating 10 at diffraction angles $\theta_1$ of about 290 and are reflected by the mirrors 6, 6' having surfaces perpendicular to the direction t of disposal of the grating so as to obliquely impinge upon the object 7 at an incident angle $\theta_0$, respectively. Thus, the diffracted lights 61, 62 form spots of about 2 mm diameter which are superposed on the object 7. The photo-detector 9 has a light-receiving portion 9a having a diameter of 0.8 mm, and the central portions of 0.8 mm diameter of the light spots formed by the diffracted lights 61, 62 are projected in real size on the light-receiving portion 9a of the photo-detector 9. Thus, the light-receiving portion 9a of the photo-detector 9 effectively receives the interference light of two diffracted lights 61, 62 and converts the interference light into an electrical signal. The photo-detector 9 then produces a signal corresponding to the Doppler frequency F which is obtained as F = 2V/d by substituting n = 1 to the formula (5) and which is independent from the wavelength $\lambda$.

Representing the distance between the mirrors 6 and 6' by $\ell$, the distance h between the diffraction grating 10 and the object 7 at which two diffracted lights 61, 62 are completely superposed on each other is given by the following formula (6).

$$h = \ell \, d^2 - \lambda^2 / \lambda \qquad (6)$$

Therefore, when the distance $\ell$ between the mirrors 6, 6' is 30 mm, the distance h between the diffraction grating 10 and the object 7 is calculated to be h = 53.7 mm, since in this case the wavelength and the grating pitch are respectively given as $\lambda$ = 0.78 µm and d = 1.6 µm, respectively. When the oscillation frequency of the laser diode 1 is changed by 1% (which generally corresponds to about 30°C change in the temperature of the laser diode 1), the light spots formed by two diffracted lights are superposed in the manners shown in Figs. 6(b) and 6(c), when the frequency is changed to long-wavelength side and to short-wavelength side, respectively. In each of the cases shown in Figs. 6 (b) and 6(c), both light spots are about 0.8 mm offset from each other. Since the photo-detector 9 detects the portion 7a where two spots overlap each other, the photo-detector 9 is capable of simultaneously detecting scattered lights generated from the diffracted lights 61, 62 and can produce a signal corresponding to the Doppler frequency F without fail. It will thus be clear that a fluctuation in the emission wavelength does not cause any substantial error.

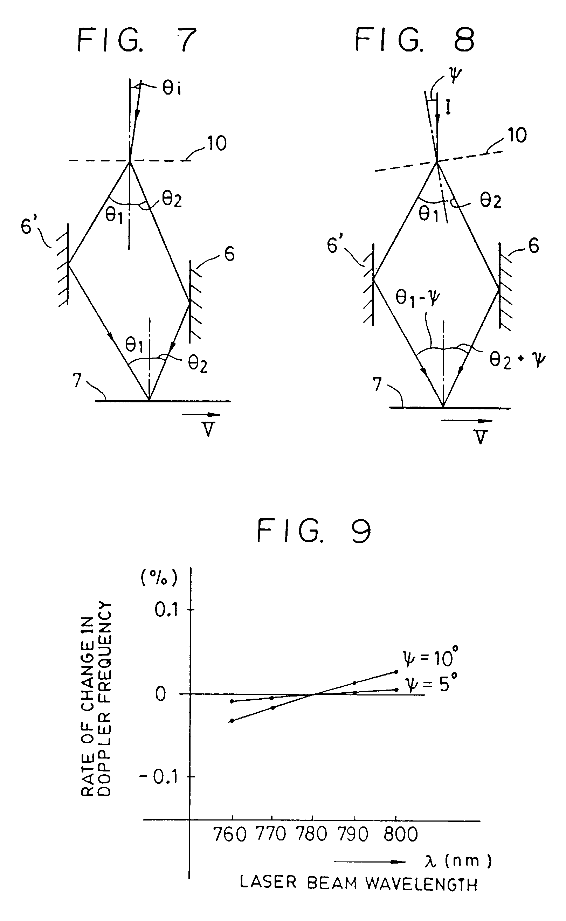

In the described embodiment, the laser beam l is made to impinge upon the diffraction grating 10 in a direction perpendicular to the direction t of arrangement of the diffraction grating 10. The precision of detection of velocity, however, does not depend on the angle $\theta_i$ of incidence to the diffraction grating 10. In addition, the influence of a change in the wavelength of the laser beam l on the detection of velocity is small even when the diffraction grating 9 is inclined. Fig. 7 illustrates in principle a state in which a laser beam l is made incident at an incident angle $\theta_i$ to the transmissive diffraction grating 10 which is arranged such that the direction of arrangement of the grating is perpendicular to the parallel reflective surfaces of the reflection mirrors 6, 6. The diffraction angle $\theta_1$ of the +1 order and the diffraction angle $\theta_2$ of the -1 order from the diffraction grating 10 satisfy the following formulae (6) when the arrangement is made to provide positive values of these angles $\theta_1$ and $\theta_2$.

$$\sin \theta_1 = \lambda/d + \sin \theta_i$$

$$\ldots\ldots \ (6)$$

$$\sin \theta_2 = \lambda/d - \sin \theta_i$$

On the other hand, the Doppler frequency F, which is determined by the interference between lights scattered by the object 7 which is moving at a velocity V in the direction perpendicular to the reflective surfaces of the reflective mirror 6, 6' and which is at the position where two diffracted lights reflected by the mirrors 6, 6' cross each other, is given by the following formula.

$$F= \frac{2V \cos \{(\theta_1 - \theta_2)/2\} \sin\{(\theta_1 + \theta_2)/2\}}{2} \qquad (7)$$

From the formulae (5) and (6), the Doppler frequency F is determined to be F = 2V/d. It is therefore understood that the Doppler frequency is independent from the angle $\theta_i$ of incidence of the laser beam to the diffraction grating 10.

It is thus possible to direct the laser beam to the diffraction grating 10 at any desired angle $\theta_i$ to the diffraction grating 10, by disposing the diffraction grating 10 in parallel with the direction of movement of the object 7 while disposing the mirrors 6, 6' such that their reflective surfaces are perpendicular to the direction of movement of the object.

Fig. 8 shows an arrangement not forming part of the invention in which the mirrors 6, 6' having reflective surfaces perpendicular to the direction of movement of the object 7 are arranged in parallel with each other as in the arrangement shown in Fig. 7, wherein the path of the laser beam l is determined to be parallel to the reflective surfaces of the mirrors 6, 6' so that the line normal to the transmissive diffraction grating 10 is inclined to the path of the laser beam l at an angle $\Psi°$. Fig. 9 shows the relationships between the wavelength $\lambda$ of the laser beam l and the Doppler frequency F as obtained when the angle $\Psi°$ is 5° and 10°, respectively.

As will be understood from Fig. 9, it is possible to suppress the influence of the wavelength on the Doppler frequency by maintaining the inclination angle $\Psi°$ of the diffraction grating to be $\Psi=5°$. Setting of the diffraction lattice 10 to satisfy this requirement can be conducted without difficulty. It is thus possible to constantly obtain a high precision of detection of the velocity.

In the arrangement shown in Fig. 5, it is possible to reduce the offset of two light spots on the object 7 due to fluctuation in the wavelength by setting a small distance $\ell$ between the mirrors 6, 6'. According to this arrangement, the distance h between the diffraction grating 10 and the object 7 also can be made small, so that the velocity meter can be made compact and the production of velocity meter is facilitated.

According to the invention, the number of order of the refracted lights used for the detection is not limited to the first order. For instance, by using the diffraction lights of the second order in the velocity meter shown in Fig. 5, the Doppler frequency F is determined by the formula (4) as F = 4v/d, whereby the resolution is improved.

The invention can be effectively carried out not only with a semiconductor laser such as a laser diode but also with other types of laser which may exhibit fluctuation in the emission wavelength. The optical system arrangements shown in Figs.4 and 5 also are only illustrative and various other arrangements can be used, and some will be described later.

The described embodiment employs a pair of diffracted lights of ± n th orders generated by the diffraction grating 10. This, however, is not exclusive and the abovedescribed advantages of the invention can be brought about also when only one diffracted light is used. When one diffracted light is used, the laser beam from the laser is split into two beams one of which is directed to a diffraction grating so as to be diffracted. The diffracted light is applied to and scattered by the object and the scattered light is made to interfere with a reference light which is the other light beam obtained by the beam splitting so that an interfered light is formed.

When the object is transparent, the velocity meter may be constructed such that the photo-detector receives the light which is transmission-scattered by the object.

All these modifications are within the scope of easy choice by those skilled in the art. The above and other embodiments are therefore only illustrative and are not intended to restrict the scope of the invention.

As has been described, according to the present invention, the optical system is so arranged that the angle θ of incidence of the laser beam to the moving object or fluid is varied in accordance with a change in the emission wavelength of the laser beam, so as to maintain the value of sin θ/λ substantially constant, so that the velocity of the moving object or fluid can be detected exactly.

It is thus possible to obtain a compact and inexpensive Doppler velocity meter incorporating a small semiconductor laser unit such as a laser diode.

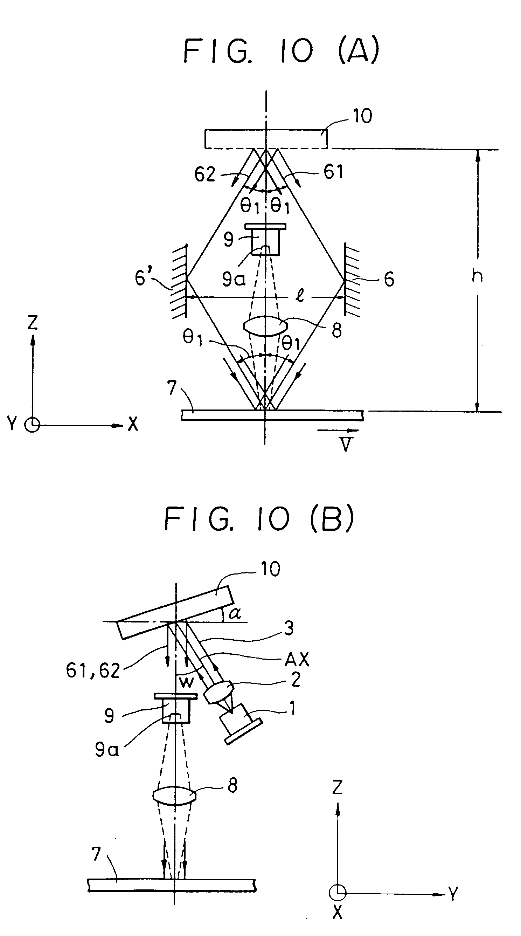

Figs. 10A and 10B are a schematic front elevational view and a schematic side elevational view of a second embodiment of the present invention. In these Figures, the same reference numerals are used to denote th same components or elements as those shown in Fig. 5. As will be understood from a comparison between Figs. 10A, 10B and Fig. 5, the basic construction of the second embodiment of the velocity meter is materially the same as that of the first embodiment shown in Fig. 5. The improvement of the second embodiment over the first embodiment resides in a change in the arrangement of the laser diode 1, collimator lens 2 and the reflection type diffraction grating 10. The laser diode 1 and the collimator lens 2 are omitted from Fig. 10A, while Fig. 10B omits illustration of the mirrors 6, 6'.

The characteristic feature of this embodiment is well understood from Fig, 10B which is a side elevational view. As will be seen from Fig. 10B, the laser diode 1 and the collimator lens 2 are disposed at positions which are spaced from the incidence plane (plane of the drawing sheet of Fig. 10A) which includes the light paths for the ± first-order diffracted lights 61, 62. In addition, the diffraction grating 10 is disposed within a plane (Z-Y plane) which are perpendicular both to the incident plane (Z-X plane) and the direction of movement of the object 7 (X-direction).

More specifically, in the described embodiment, the diffraction grating 10is inclined such that the direction of the grating line (line corresponding to groove perpendicular to the direction t of grating arrangement) forms an angle a to the direction (y direction) which is perpendicular to the direction of movement of the object. In this embodiment, the angle α is set to be 15°.

On the other hand, the beam application system including the laser diode 1 and the collimator lens 2 is arranged such that the optical axis AX of this illuminating system forms an angle W to the axis (Z direction) perpendicular to the object. The angle W is formed in the same plane as the plane in which the diffraction grating 10is inclined, i.e., in the Z-Y plane. In this case, the angle W is determined to be 28.06°.

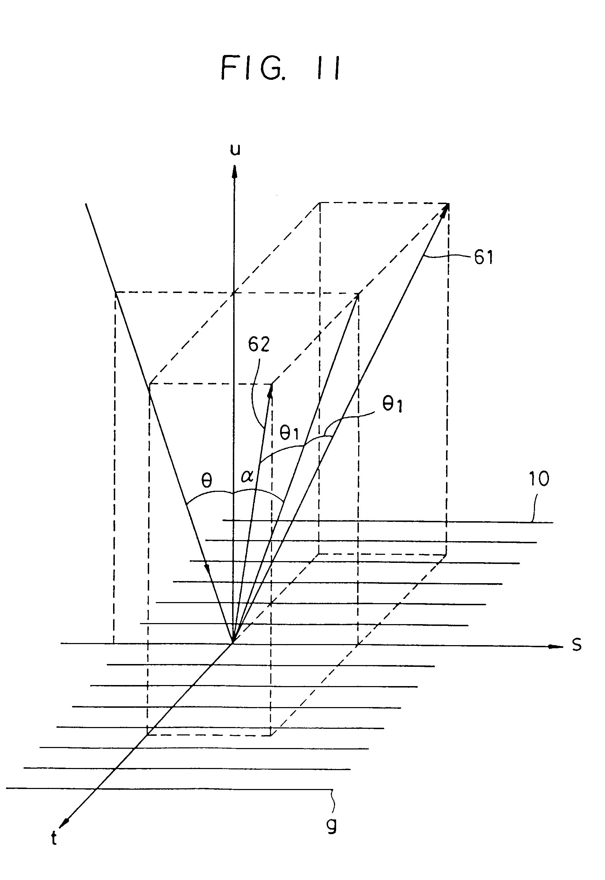

Referring now to Fig. 11, a grating plane (t-S plane) is defined by the direction t of arrangement of grating and the direction S in which the grating lines g extend. When a laser beam impinges upon the diffraction grating at an incident angle θ to the line u normal to the t-S plane, the angle formed between the plane including the light paths of the diffracted lights 61, 62 of the ± first-order is represented by a, while the bisector of the angle formed between the diffracted lights 61, 62 of the ± first-order is represented by $\theta_1$. Then, the following conditions are met:

$$d \sin \theta_1 = \lambda$$

(where d represents the pitch of the diffraction grating, while λ represents the wavelength)

$$\sin \theta = \cos \theta_1 \sin \alpha$$

In this embodiment, since the angles a and W are respectively 15° and 28.06°, while θ is expressed as θ = W - α, the diffraction angle $\theta_1$ of the diffracted lights 61, 62 of the ± first-order is expressed as $\theta_1 = 29°$. In addition, the incidence plane including the paths of the diffracted lights 61, 62 of the ± first-order is perpendicular to the object 7 and parallel to the Z-X plane. In this embodiment also, the refracted lights 61, 62 of the ± first-order are emitted from the diffraction grating 10 at diffraction angle $\theta_1$ which is substantially equal to 290 and are reflected by the mirrors having reflective surfaces perpendicular to the direction X of movement of the object 7, so as to obliquely impinge upon the object 7 at incident angle $\theta_1$. The diffracted lights 61, 62 form light spots of about 2 mm diameter which overlap each other on the object 7. The photo-detector 9 has a light-receiving portion 9a of 0.8 mm diameter on which the central portion of the overlapping light spots in diameter of 0.8 mm is projected in real size through the condenser lens 8. Thus, the light-receiving portion 9a of the photo-detector 9 efficiently receives the interference light formed by the scattered lights obtained from the diffracted lights 61, 62, and photo-electrically coverts the interference light into electrical signal. The photo-detector 9 therefore produces a signal corresponding to the Doppler frequency F which is obtained as F = 2V/d by substituting n =1 to the formula (5) and which is independent from the wavelength $\lambda$.

In the velocity meter shown in Fig. 5, the distance h between the object 7 and the diffraction grating 10 is determined as h = 53.7 mm. In contrast, in the velocity meter of the embodiment shown in Figs. 10A and 10B in which the light applying system including the laser diode 1 and the collimator lens 2 disposed at a position outside the incident plane which includes the paths of the diffracted lights 61, 62 of the $\pm$ first order, the distance h between the object 7 and the diffraction grating 10 can be reduced to about 32 mm. A change in the oscillation frequency of the laser diode 1 by 1% causes about 0.5 mm deviation of each light spot. Thus, the offset of two light spots from each other is reduced as compared with the embodiment shown in Fig. 5.

It will be understood that the second embodiment of the velocity meter shown in Figs. 10A and 10B can have a reduced size and yet be capable of measuring the velocity at a higher detection sensitivity than the embodiment shown in Fig. 5.

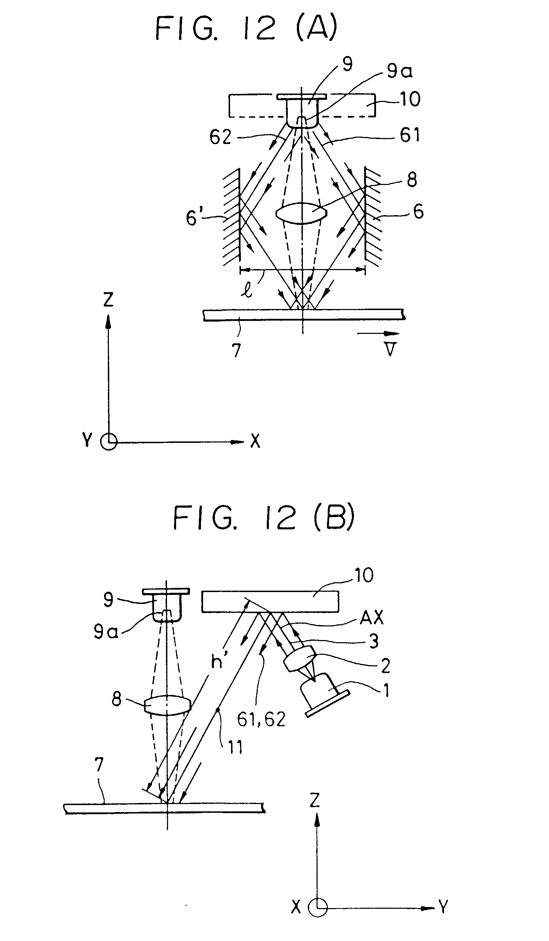

Figs. 12A and 12B are a schematic front elevational view and a schematic side elevational view of a third embodiment of the present invention. In these Figures, the same reference numerals are used to denote the same components or elements as those shown in Figs. 5, 11A and 11B. As will be realized from a comparison between Fig. 5 and Figs. 12A, 12B, the third embodiment of the velocity meter of the invention has a basic arrangement which is substantially the same as that of the first embodiment shown in Fig. 5. The improvement of the third embodiment over the first embodiment resides in a specific arrangement of the laser diode 1, collimator lens 2 and the reflection-type diffraction grating 10. Another point of difference resides in that, while in the second embodiment shown in Figs. 11A, 11B the diffraction grating 10 is installed obliquely at a position above the photo-detector 9, the diffraction grating 10 in the third embodiment is disposed adjacent to the photo-detector and in parallel with the surface of the object 7.

The laser diode 1 and the collimator lens 2 are omitted from Fig. 12A, while Fig. 12B lacks illustration of the mirrors 6, 6'. In Fig. 12B, numeral 11 denotes a point at which the diffracted light 61 or 62 is reflected by the mirror 6' or 6 which is not shown.

In this embodiment, the diffraction grating 10 is positioned substantially at the same level as the photo-detector 9. As explained before, the diffraction grating 10 is disposed substantially in parallel with the surface of the object 7 and the direction t of arrangement of the grating coincides with the direction X of movement of the object 7.

The optical axis AX of the light application system including the laser diode 1 and the collimator lens 2 is inclined to the grating lines of the diffraction grating 10 at a predetermined angle $\beta$ with respect to the X-Y plane. The laser light emitted from the laser diode 1 is collimated by the collimator lens 2 and obliquely impinges upon the fixed diffraction grating 10. Therefore, the directions of emission of the refracted lights 61, 62 of the $\pm$ first order from the diffraction grating 10 form the above-mentioned angle $\beta$ to the grating lines of the diffracted grating 10 with respect to the Z-Y plane. The incident plane including the light paths of the diffracted lights 61,62 of the $\pm$ first order is therefore inclined both to the diffraction grating 10 and the surface of the object 7. In this embodiment, as in the cases of the preceding embodiments, the grating pitch d of the grating 10 and the wavelength $\lambda$ are respectively determined as d = 1.6 $\mu$m and A = 0.78 $\mu$m. The diffraction angles of the diffracted lights 61, 62 of the $\pm$ first order, therefore, are determined as $\theta_1 = 29°$.

The reflection-diffracted lights 61, 62 from the diffraction grating 10 are respectively reflected by the mirrors 6, 6' having reflective surfaces perpendicular to the direction t of arrangement of the grating, and obliquely impinge upon the object 7 at the angle $\theta_1$ to the Z-X plane and at the angle $\beta$ to the X-Y plane. The diffracted lights 61, 62 form light spots of several millimeters in diameter which overlap each other on the object 7. The photo-detector 9 has a light-receiving portion 9a of 0.8 mm diameter on which the central portion of the overlapping light spots in diameter of 0.8 mm is projected in real size through the condenser lens 8. Thus, the light-receiving portion 9a of the photo-detector 9 efficiently receives the interference light formed by the scattered lights obtained from the diffracted lights 61, 62, and photo-electrically coverts the interference light into electrical signal. The photo-detector 9 therefore produces a signal corresponding to the Doppler frequency F which is obtained as F = 2V/d by substituting n =1 to the formula (5) and which is independent from the wavelength $\lambda$.

In this embodiment, the light applying optical system including the laser diode 1 and the collimator lens 2 and the detection optical system including the condenser lens 8 and the photo-detector 9 are arranged at positions outside the incident plane containing the light paths of the diffracted lights 61, 62, so that a more compact design of the velocity meter is obtained over that shown in Figs. 11A and 11B. For instance, in this embodiment of the velocity meter, the distance h' between the diffraction grating 10and the object 7 along the incident plane containing the paths of the diffracted lights 61, 62 can be reduced to about 23 mm, while the spacing between the diffraction grating 10 and the object 7 can be made as small as 20 mm or les. Furthermore, in the velocity meter of this embodiment, the deviation of each of the light spots formed by the diffracted lights 61 and 62 caused by a 1% change in the oscillation frequency of the laser diode 1 can be made as small as 0.35 mm.

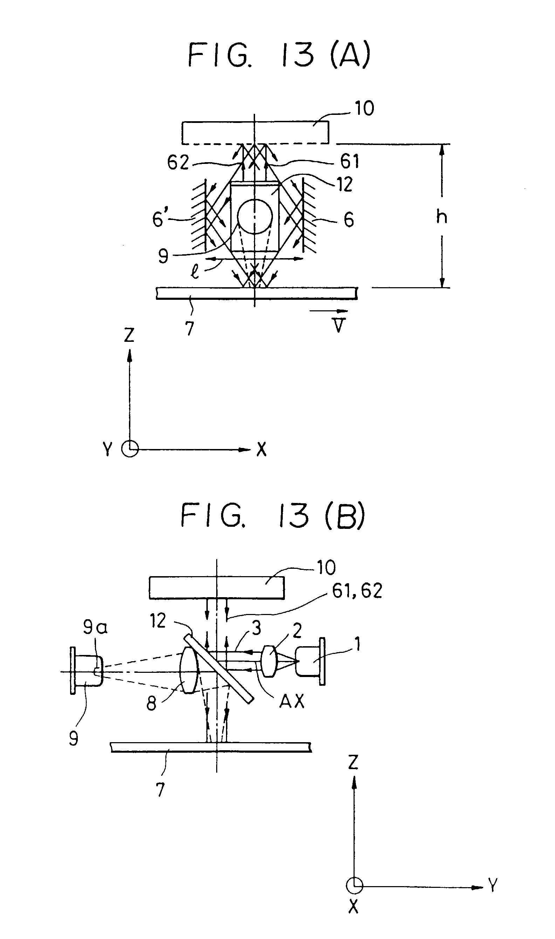

Figs. 13A and 13B are a schematic front elevational view and a schematic side elevational view of a fourth embodiment of the present invention. In these Figures, the same reference numerals are used to denote the same components or elements as those shown in Figs. 5, 10A, 10B, 12A and 12B. In Figs. 13A and 13B, numeral 12 denotes a double-sided mirror.

This embodiment has a feature over the embodiment shown in Fig. 5 in that the laser diode 1, collimator lens 2, the condenser lens 8 and the photo-detector 9 are arranged in a plane which is parallel both to the surface of the object 7 and the diffraction grating 10, by virtue of the use of the double-sided mirror 12.

In this embodiment, the direction t of the diffraction grating 10 and the direction X of movement of the object 7 coincide with each other and, as will be described later, the incident planes containing the light paths of the diffracted lights 61, 62 are perpendicular to the directions t and X and also to the surface of the object 7.

The double-sided mirror 12 is produced by, for example, forming reflective films of $A\ell$ on both sides of a glass substrate. Alternatively, the double-sided mirror 12 may be made from a metallic plate. The double-sided mirror 12 is arranged between the object 7 and the diffraction grating 10 such that the reflective surfaces on both sides of the double-sided mirror 12 form 45° to the surface of the object surface 7. The light applying system including the laser diode 1 and the collimator lens 2 is arranged so as to direct the laser beam onto the upper reflective surface of the double-sided mirror 12, such that the optical axis AX of this system is parallel to the grating lines of the diffraction grating 10. The detection system including the condenser lens 8 and the photo-detector 9 is disposed so as to receive the light reflected by the lower reflective surface of the double-sided mirror 12, and is arranged such that the optical axis of this system is parallel to the optical axis AX of the light applying system. The optical axis AX of the light applying means is orthogonally deflected at the reflective surface of the double-sided mirror 12 and orthogonally crosses the diffraction grating 10. The optical axis of the detection system also is orthogonally deflected at the reflective surface of the double-sided mirror 12 and orthogonally crosses the surface of the object 7.

In operation, the laser beam from the laser diode 1 is collimated by the collimator lens 2 and the collimated beam impinges upon one of the reflective surfaces of th double-sided mirror 12. The laser beam reflected by the mirror 12 then vertically impinges upon the fixed diffraction grating 10 perpendicularly thereto, and is reflection-diffracted by the diffraction grating 10. Among the diffracted lights of many orders, the diffracted lights 61, 62 of the ± first orders are emitted from the diffraction grating 10 at the diffraction angle $\theta_1$ of about 29° and are directed to the mirrors 6, 6', respectively. The double-sided mirror 12 is sized and shaped so as not to interrupt the light paths 61, 62 of the ± first orders derived from the diffraction grating 10. The reflective surfaces of the mirrors 6, 6' are parallel to the plane which orthogonally crosses the direction X of movement of the object 7 and the direction t of arrangement of the grating of the difraction grating 10.

The diffracted lights 61, 62 are reflected by the mirrors 6, 6' and are made to be incident to the object 7 obliquely at an incidence angle $\theta_1$. The diffracted lights 61, 62 form light spots of about 2 mm diameter which overlap each other on the object 7. The photo-detector 9 has a light-receiving portion 9a of 0.8 mm diameter on which the central portion of the overlapping light spots in diameter of 0.8 mm is projected in real size through the condenser lens 8. Thus, the light-receiving portion 9a of the photo-detector 9 efficiently receives the interference light formed by the scattered lights obtained from the diffracted lights 61, 62, and photo-electrically coverts the interference light into electrical signal. The photo-detector 9 therefore produces a signal corresponding to the Doppler frequency F which is obtained as F = 2V/d by substituting n =1 to the formula (5) and which is independent from the wavelength $\lambda$.

In this embodiment, the laser diode 1, collimator lens 2, condenser lens 8 and the photo-detector 7 are disposed outside the incident plane which contains the light pathes of both diffracted lights 61,62 and these elements are disposed in a plane which is substantially parallel both to the diffraction grating 10 and the object 7, by virtue of provision of the double-sided mirror 12 which is disposed at an inclination between the diffraction grating 10 and the object 7. This embodiment, therefore, provides a velocity meter which is still compact as compared with the embodiment shown in Figs. 10A and 10B. In fact, this embodiment makes it possible to reduce the distance h between the diffraction grating 10 and the object 7 to 20 mm or so, while reducing also the deviation of each of the light spots formed by the diffracted lights 61, 62 in response to 1% change in the laser diode oscillation frequency to 0.3 mm or so.

In the second to fourth embodiments described hereinbefore, the diffracted lights of ± first orders are used as a pair of the diffracted lights to be applied to the object 7. This, however, is only illustrative and the invention does not exclude the use of a pair of diffracted lights of the same order with opposite degrees such as ± second orders or ± third orders , as well as a combination of two diffracted lights of different orders.

In the second to fourth embodiments as described, the direction t of arrangement of the diffraction grating 10 coincides with the direction X of movement of the object 7. This, however, is only illustrative and the diffraction grating 10 may be inclined such that the direction t of arrangement of the grating is inclined to the moving direction X with respect to the Z-X plane, i.e., the incident plane containing the light paths of the pair of diffracted lights. Alternatively, the arrangement may be such that the collimated light from the light applying system 10 is made to impinge upon the diffraction grating 10 obliquely with respect to the incident plane. Anyway, a precise measurement of velocity is made possible by arranging such that the pair of diffracted lights impinge upon substantially on the same point on the object 7 at a crossing angle which is substantially the same as the angle formed between these two diffracted lights when these lights are emitted from the diffraction grating 10.

In general, when a light having a large tendency of interference such as a laser beam is applied to an object, the light is scattered by the fine convexities and concavities so as to be phase-modulated in a random manner and forms a spot pattern which is a so-called speckle pattern on an observation surface such as a light-receiving surface on the photo-detector.

Therefore, in an ordinary Doppler velocity meter, when the object or the fluid is moved, a change in the brightness of the interference light caused by a Doppler shift is modulated by an irregular change of brightness caused by a flow of the speckle pattern. The output signal from the photo-detector also is modulated by a change in the transmittance (or reflectivity) of the object. The frequency of the change in the brightness caused by the flow of speckle pattern and the change in the frequency of the transmittance (or reflectivity) of the object are very low as compared with the Doppler frequency expressed by the formula (4). It is, therefore, a common measure to pass the output signal from the photo-detector through a high-pass filter so as to electrically remove the low-frequency components, thus picking up only the Doppler signal.

When the moving velocity of the object is very low, only a small difference exists between the Doppler frequency and the low-frequency components to be removed, so that it is not possible to use a high-pass filter. In such a case, it is impossible to measure the velocity of the object. In general, a laser Doppler velocity meter theoretically has no function for discriminating the moving direction (direction of movement of the object). This undesirably limits the use of the velocity meter.

Velocity meters of the invention which will be described hereinunder are capable of eliminating this problem, while offering the same advantages as those offered by the preceding embodiments.

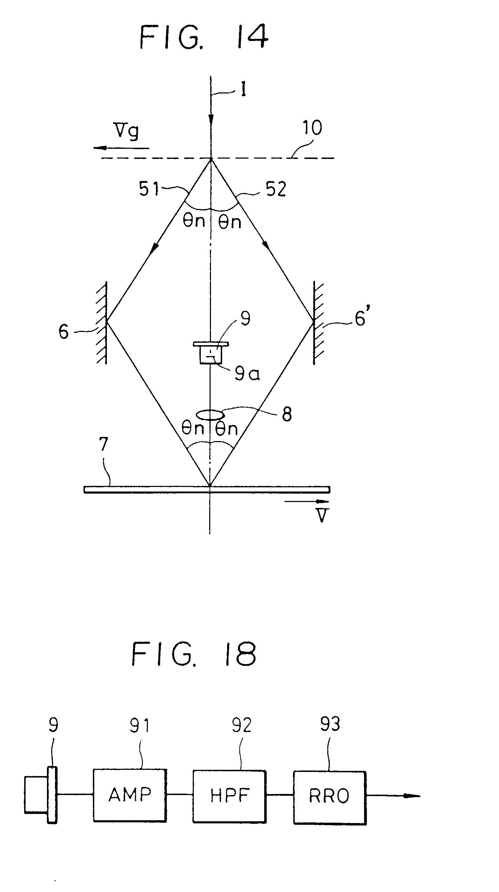

Fig. 14, for reason of simplification again referring to a transmissive grating, schematically shows the manner in which a frequency modulation is conducted by the movement of the diffraction grating. The diffraction grating 10 having a grating pitch d moves at a constant velocity $V_g$ from the right to the left as viewed in Fig. 14. When the laser beam I is made to impinge upon the diffraction grating 10 which is being moved, the diffracted lights 51, 52 of the ± n th orders are positively and negatively Doppler-shifted by an amount expressed by ± $V_g$/nd. The diffraction angle $\theta_n$ of the refracted lights 51 and 52 meets the condition of:

$$\sin \theta_n = \lambda/nd \tag{8}$$

where, $\lambda$ vrepresents the wavelength of the light.

When the the diffracted lights 51, 52 of the ± n th orders are applied via the mirrors 6, 6' to the object 7 moving at the velocity V such that each of the diffracted lights has an incident angle of $\theta_n$, the diffracted light 51 of the +n th order is Doppler-shifted in amount of $(V_g + V)/nd$, while the diffracted light 52 of the -n th order is Doppler-shifted in amount of $(V_g + V)/nd$. In this case, therefore, the Doppler frequency F is given by the following formula:

$$F = 2(V_g + V)/nd \tag{9}$$

It is therefore possible to obtain a Doppler frequency F which is independent from the wavelength of the laser beam.

As will be seen from the formula (9), it is possible to obtain the Doppler frequency F having a value which provides a large difference between the Doppler frequency and the low-frequency components caused by a change in the speckle pattern or transmittance (or reflectivity) of the object, by virtue of the movement of the diffraction grating 10 at the velocity $V_g$. It is therefore possible to pick up only the Doppler signal from the output of the photo-detector by eliminating low-frequency components of the output through a high-pass filter, thus enabling measurement of velocity even when the velocity is low. The velocity $V_g$ of movement of the diffraction grating 10 can be determined suitably in consideration of factors such as the velocity of the object, frequency characteristics of the high-pass filter, and so forth.

In the explanation shown in Fig. 14, the diffraction grating 10 is moved from the right to the left as viewed in this Figure. This, however, is not exclusive and the diffraction grating 10 may be moved from the left to the right as viewed in this Figure. Movement of the diffraction grating in such a direction is effected when the moving velocity V of the object is very high. A very high moving velocity of the object 7 produces a very high Doppler frequency F, with the result that the frequency of the output signal from the photo-detector becomes correspondingly high. It is therefore necessary that the signal processing circuit for processing the output from the photo-detector 9 has superior frequency-responding characteristics. In such a case, the diffraction grating 10 is moved from the left to the right as viewed in Fig. 5, so that the velocity $V_g$ in formula (9) is changed to $-V_g$, thus reducing the level of the load on the circuit.

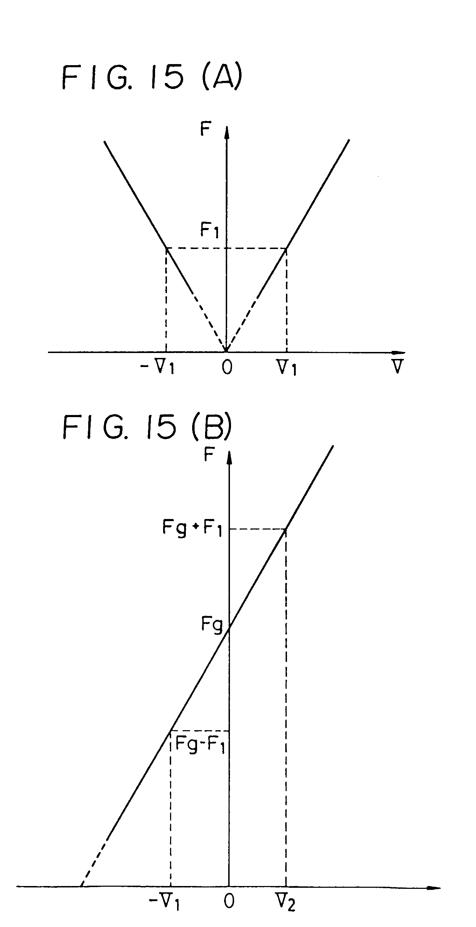

Figs. 15A and 15B show the relationships between the velocity V of the object and the Doppler frequency. More specifically, Fig. 15(A) shows the relationship as obtained when the diffraction grating is fixed, while Fig. 15B shows the relationship as obtained when the diffraction grating is moved at a velocity $V_g$ in accordance with the arrangement shown in Fig. 14. As will be seen from Figs. 15A and 15B, the frequency $F_1$ detected when the diffraction grating is fixed is a function of both the two velocities $V_1$ and $-V_1$ of different directions, so that it is impossible to discriminate the direction of movement of the object. In contrast, when the diffraction grating is moved, a Doppler frequency F expressed by $F = F_g + F_1$ is obtained for a velocity $V_1$, while a Doppler frequency F expressed by $F = F_g - F_1$ is obtained for a velocity $-V_1$, thus enabling the detection of not only the velocity but also of the direction of movement of the object, simultaneously.

As has been described, the laser Doppler velocity meter of the present invention can have a function for discriminating the direction of movement of the object.

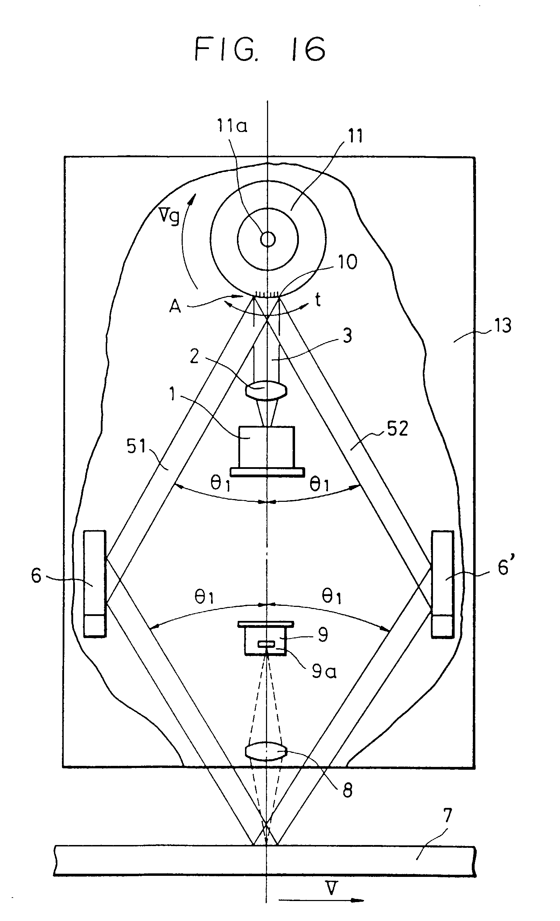

Fig. 16 schematically shows a fifth embodiment of the velocity meter in accordance with the present invention having a function for discriminating the direction of movement of the object. In this Figure, the same reference numerals are used to denote the same components as those appearing in Fig. 5 showing the first embodiment. Numeral 11 denotes a cylinder having a diffraction grating 10 of a grating pitch d of 1.6 pm formed on the inner peripheral surface thereof. The diffraction grating 10 is of reflection type and has grating lines (grooves) which extend in a direction perpendicular to the direction t of arrangement of the grating, i.e., in a direction perpendicular to the drawing sheet of Fig. 16. The diffraction grating 10 can be formed by periodically arranging reflective films of A, Au or the like or forming grooves periodically along the side surface of the member constituting the cylinder 11.

Thus, the diffraction grating 10 in this embodiment may be of amplitude type of phase (relief) type as in the cases of other embodiments. The cylinder 11 is secured to the drive shaft (rotor shaft) lla of a motor, so that the cylinder 11 is rotated at a constant speed as the motor operates, whereby the diffraction grating 10 formed on the peripheral wall of the cylinder 11 is moved at a constant velocity $V_g$. The direction of movement of the diffraction grating 10 coincides with the direction t of arrangement of the grating. In this embodiment, the cylinder 11 is rotated clockwise so that the diffraction grating 10 at a point A is moved from the right to the left, i.e., in the counter direction to the movement of the object 7. Numeral 13 designates a frame in which various components and elements are encased.

This embodiment incorporates, as the laser 1, a laser diode capable of emitting a laser beam of a wavelength $\lambda$ of 0.78 μm, so as to realize a compact construction. The laser 1 may be a single mode laser or a multi-mode laser.

In operation, the laser beam from the laser diode 1 is collimated by the collimator lens 2 and the collimated beam of about 2 mm diameter impinges upon the reflection type refraction grating 10 in a direction perpendicular to the direction t of arrangement of the grating. The diffracted lights 51, 52 of the ± first orders are emitted from the diffraction grating 10 at the diffraction angle $\theta_1$ of about 29° and are directed respectively to the mirrors 6, 6' which have reflective surfaces perpendicular to the direction t of arrangement of the grating and are reflected by these mirrors so as to impinge upon the object 7 at an incident angle of $\theta_1$. The diffracted lights 51, 52 form light spots of about 2 mm diameter which overlap each other on the object 7. The photo-detector 9 has a light-receiving portion 9a of 0.8 mm diameter on which the central portion of the overlapping light spots in diameter of 0.8 mm is projected in real size through the condenser lens 8. Thus, the light-receiving portion 9a of the photo-detector 9 efficiently receives the interference light formed by the scattered lights obtained from the diffracted lights 51, 52, and photo-electrically converts the interference light into electrical signal. The photo-detector 9 then produces an output corresponding to the Doppler frequency which is independent from the wavelength of the laser beam and which is determined in accordance with the velocity Vg of the diffraction grating and the moving velocity V of the object 7 in accordance with the following formula (10) derived from the formula (9) by setting the number n of order as n = 1. Since the moving velocity Vg of the diffraction grating is constant, it is possible to measure the velocity V from the following formula (11).

$$F = 2 (V_g + V)/d \qquad (10)$$

$$V = F (d/2) - V_g \qquad (11)$$

The measurement of the velocity V of the object 7 is conducted in a manner shown below.

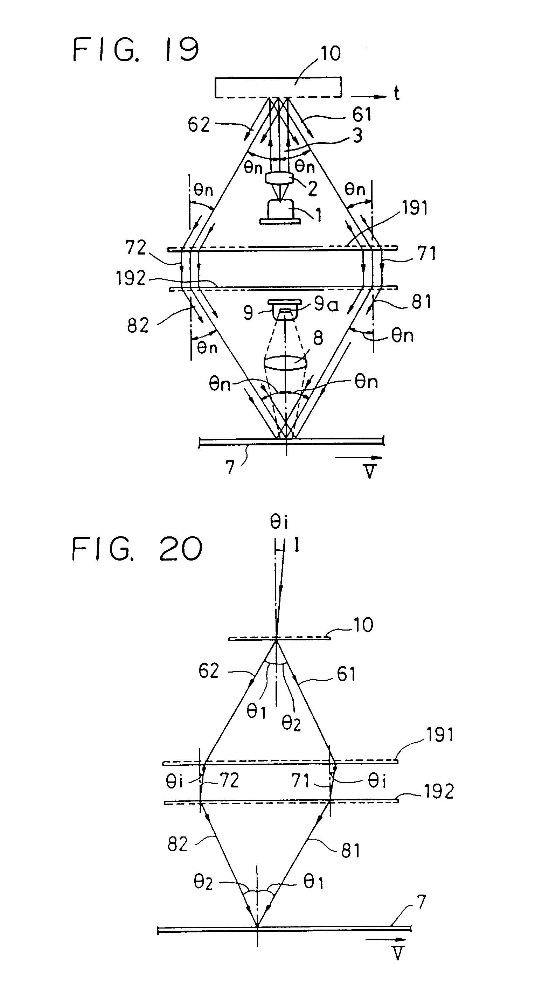

As shown in Fig. 18, the output signal from the photo-detector 9 is amplified by an amplifier 91 and the amplified signal is delivered to a processing circuit 93. The processing circuit executes the processing corresponding to the formula (11) and delivers a voltage corresponding to the velocity V of the object.

In this embodiment, the laser beam impinges upon the diffraction grating 10 in a direction perpendicular to the direction t of arrangement of the grating. As stated before, however, the precision of detection of the velocity of the object 7 does not have any dependency on the angle of incidence of the laser beam I. Furthermore, any fluctuation of the wavelength of the laser beam does not substantially affect the detection of velocity of the object 7 even when the diffraction grating 10 is inclined. In this embodiment, therefore, the position of the light applying system including the laser diode 1 and the collimator lens 2 relative to the diffraction grating 10 may be changed.

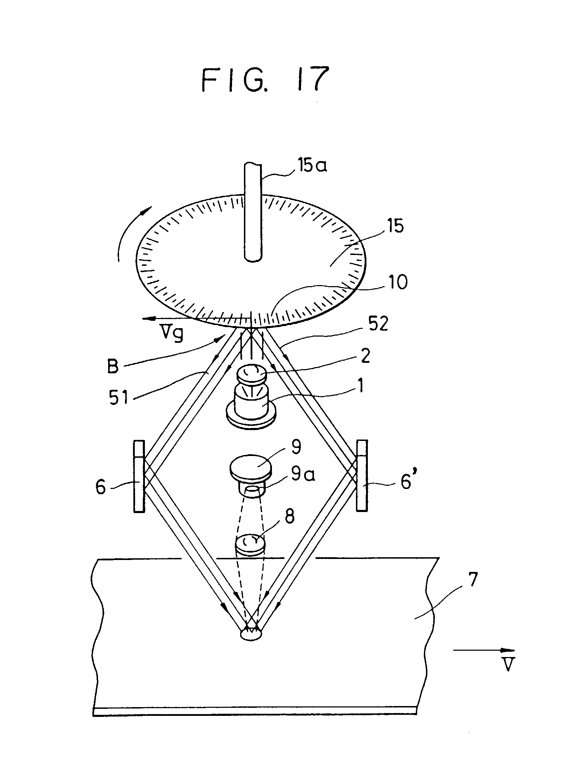

Fig. 17 schematically shows a sixth embodiment of the velocity meter in accordance with the present invention having a function for discriminating the direction of movement of the object. In this Figure, the same reference numerals are used to denote the same components as those appearing in Figs. 5 and 16. Numeral 12 denotes a disk having a radial diffraction grating 10 of a grating pitch d of 1.6 pm formed on the peripheral end region thereof. The diffraction grating 10 in this embodiment may be of any desired type as in the cases of the embodiment shown in Fig. 16. The disk 11 is secured to the drive shaft (rotor shaft) 12a of a motor, so that the cylinder 11 is rotated at a constant speed as the motor operates,whereby the diffraction grating 10 formed on the peripheral wall of the cylinder 11 is moved at a constant velocity $V_g$. The direction of movement of the diffraction grating 10 coincides with the direction t of arrangement of the grating. In this embodiment, the cylinder 11 is rotated clockwise so that the diffraction grating 10 at a point B is moved from the right to the left, i.e., in the counter direction to the movement of the object 7. Numeral 13 designates a frame in which various components and elements are encased.

This embodiment incorporates, as the laser 1, a laser diode, though various other types of laser can be used as in the cases of other embodiments.

In operation, the laser beam from the laser diode 1 is collimated by the collimator lens 2 and the collimated beam of about 2 mm diameter impinges upon the reflection type refraction grating 10 in a direction perpendicular to the direction t of arrangement of the grating. The diffracted lights 51, 52 of the ± first orders are emitted from the diffraction grating 10 at the diffraction angle θ of about 29° and are directed respectively to the mirrors 6, 6' which have reflective surfaces perpendicular to the direction t of arrangement of the grating and are reflected by these mirrors so as to impinge upon the object 7 such as a paper at an incident angle of $\theta_1$. The diffracted lights 51, 52 form light spots of about 2 mm diameter which overlap each other on the object 7. The photo-detector 9 has a light-receiving portion 9a of 0.8 mm diameter on which the central portion of the overlapping light spots in diameter of 0.8 mm is projected in real size through the condenser lens 8. Thus, the light-receiving portion 9a of the photo-detector 9 efficiently receives the interference light formed by the scattered lights obtained from the diffracted lights 51, 52, and photo-electrically converts the interference light into electrical signal. The photo-detector 9 then produces an output corresponding to the Doppler frequency which is independent from the wavelength of the laser beam and which is determined in accordance with the formula (10). Then, as shown in Fig. 18, the output from the photo-detector 9 is delivered to a processing circuit 93 through an amplifier 91 and a high pass filter 92 so that a voltage signal corresponding to the velocity V of movement of the object 7 is derived from the processing circuit 93.

In this embodiment, the diffraction grating 10 has radial diffraction lines so that the diffracted lights 51, 52 of the ± first-order exhibit oval cross-section. Such a deformation of the beam cross-section, however, can be avoided if the disk 11 has a diameter large enough to enable the grating lines to be regarded as being materially parallel to each other.

In the embodiments shown in Figs. 16 and 17, the object 7 moves unidirectionally from the left to the right as viewed in these Figures, and the optical systems are so arranged that the frequency of the output signal from the photo-detector 9 is gradually increased in accordance with the movement of the object. This, however, is only illustrative and the optical system in each of these embodiments may be arranged to detect both the moving velocity and the moving direction when the object is movable in two opposite directions. It is also possible to arrange the optical system such that the frequency of the output signal from the photo-detector 9 is lowered in response to the movement of the object.

Thus, the diffraction grating is moved in each of the embodiments shown in Figs. 16 and 17. Factors such as the grating pitch, moving velocity and the moving direction of the diffraction grating are determined in view of the effect or the precision to be attained.

The pair of reflection-diffracted lights of the ± first order generated by the diffraction grating 10 applied to the object 7 in each of the fifth and sixth embodiments may be substituted by other types of combination of diffracted lights such as a pair of transmission-diffracted lights which are diffracted through the diffraction grating, ± second-order diffracted lights generated by the diffraction grating, or ± third order diffracted lights generated by the diffraction grating. It is thus possible to form various types of laser Doppler velocity meter without difficulty.

As will be understood from the foregoing description, it is possible to precisely detect the velocity of movement of an object or the velocity of a moving fluid regardless of any change in the wavelength of the laser beam. It is also possible to arrange such that the photo-detector produces an output of a frequency higher or lower than a predetermined frequency. In addition, the velocity meter of the invention can be constructed so as to detect not only the velocity but also the direction of movement of an object.

Since the velocity meter can be arranged such that the photo-detector produces an output of a frequency higher than a predetermined frequency, the detection of velocity is possible even when the velocity of the moving object is very low, whereby the measuring range of the velocity meter can be remarkably broadened. Therefore, the detection of moving velocity of the object is made possible even when the movement of the object has been just started or movement is going to be stopped. The velocity meter of the invention is therefore usable also as a length measurement device for locating an object.

Fig. 19 is a schematic illustration of a seventh embodiment of the velocity meter in accordance with the present invention. In this Figure, the same reference numerals are used to denote the same components or elements as those used in the first embodiment shown in Fig. 5. The seventh embodiment is different from the first embodiment shown in Fig. 5 in that transmission-type refraction gratings 191, 192 are used in place of the mirrors 6, 6' shown in Fig. 5. In the following description, the reflection-type diffraction grating 10 will be referred to as "first diffraction grating 10", while the diffraction gratings 191 and 192 will be respectively referred to as "second diffraction grating 191" and "third diffraction grating 192".

The light-receiving surfaces of the first, second and the third diffraction gratings are parallel to one another, and axes perpendicular to these light-receiving surfaces are parallel to the optical axes of the collimator lens 2 and the lens 8. The directions of arrangements of gratings of the second and third diffraction gratings 191, 192 are th same as that t of the first diffraction grating 10, and all the first to third diffraction gratings have an equal pitch of gratings represented by $d = 1.6$ μm.

In addition, the first to third diffraction gratings are so arranged that the distance between the light-receiving surfaces of the first diffraction grating 10 and the second diffraction grating 191 is equal to the distance between the light-receiving surfaces of the third diffraction grating 193 and the object. The second and the third diffraction gratings 191 and 192 are relief-type diffraction gratings.

In operation, a laser beam of a wavelength A substantially equal to 0.78 μm is collimated through a collimator lens 2 into a collimated beam 3 having a diameter of about 2 mm. The collimated beam impinges upon the first diffraction grating 10 substantially perpendicularly to the light-receiving surface of the diffraction grating 10. The first diffraction grating 10 reflects and diffracts the incident collimated beam 3. Consequently, the first diffraction grating 10 emits ± first-degree diffraction lights 61, 62 at a diffraction angle $\theta_n$ which is substantially equal to 29°. These diffracted lights 61, 62 are applied to the second diffraction grating 191. The arrangement is such that a diffracted light 72 of the order -1 obtained from the light 62 and a diffracted light 71 of +1 order obtained from the light 61 are emitted from the second diffraction grating 191 in parallel with each other and also in parallel with the collimated beam 3, i.e., the optical axis. These diffracted lights 71 and 72 are applied to the transmission-type diffraction grating 192. The arrangement is such that a diffracted collimated light 82 of -1 order obtained from the diffracted collimated light 72 and a diffracted collimated light 81 of +1 order obtained from the diffracted light 71 are emitted from the transmission-type diffraction grating 192. These diffracted lights 81 and 82 are directed toward the object 7 and are made incident to the object 7 at the incident angle $\theta_n$, whereby light spots of about 2 mm diameter are formed on the object 7. Then, as explained before in connection with Fig. 5, the photo-detector 9 determines the Doppler frequency F as follows, by substituting n = 1 to the formula (5), upon receipt of the light reflected and scattered by the photo-detector 9.

$$F = 2V/d \qquad (12)$$

When the emission wavelength $\lambda$ of the laser diode 1 is changed, the angle $\theta_n$ is changed due to relation of d sin $\theta_n = \lambda$. Nevertheless, the positions of the light spots formed by the diffracted lights 81 and 82 remain unchanged. In addition, these two light spots always overlap each other because the distance between the reflection-type diffraction grating 10 and the transmission-type diffraction grating 191 is made equal to the distance between the transmission-type diffraction grating 192 and the object 7.

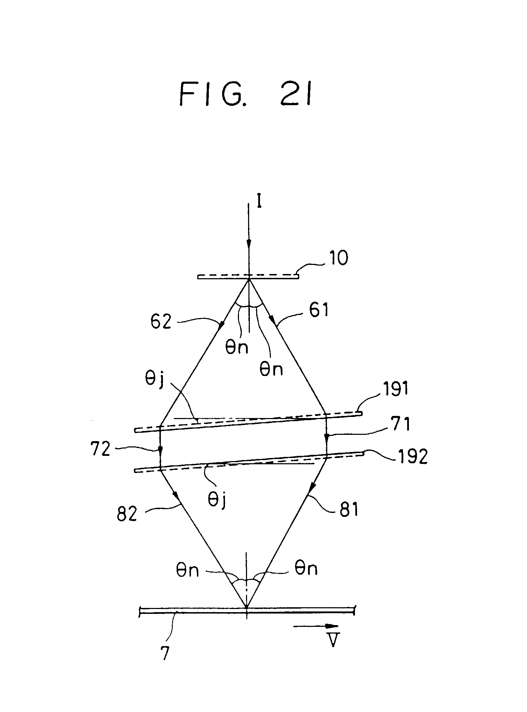

Fig. 20 shows an arrangement in which the first, second and the third diffraction gratings 10, 191 and 195 are arranged in parallel with one another, with a laser beam I incident to the first diffraction grating 10 at an incident angle $\theta_i$. For reasons of simplification of the figures, the description in connection with Fig. 20 and Fig. 21 which will be mentioned later will proceed on an assumption that the first diffraction grating 10 is of a transmission type. Also here, the explained principles hold true when a reflection type diffraction grating is employed.

The angles $\theta_1$ and $\theta_2$ at which the transmission-diffracted lights 61 and 62 of +1 and -1 orders are emitted from the first diffraction grating 10 are expressed by the following formulae, when these angles are expressed in positive values:

$$\sin \theta_1 = \lambda/d + \sin \theta_i$$

$$\sin \theta_2 = \lambda/d - \sin \theta_i \qquad (13)$$

Upon receipt of the diffracted lights 61 and 62, the second diffraction grating 191 emits parallel diffracted lights 71 and 72 at an angle $\theta_i$ and these lights 71 and 72 are further diffracted in the third diffraction grating 192 whereby diffracted lights 81 and 82 are obtained. These lights 81 and 82 impinge upon the object 7 at incident angles $\theta_1$ and $\theta_2$, respectively. The Doppler frequency F' produced by the scattered lights obtained from these diffracted lights 81 and 82 is given by the following formula.

$$F' = \frac{2V \cos \{(\theta_1 - \theta_2)/2\} \sin\{(\theta_1 + \theta_2)/2\}}{\lambda}$$

$$= V(\sin \theta_1 + \sin \theta_2)/\lambda \qquad (14)$$

From the formulae (13) and (14), the Doppler frequency F' is determined as follows:

$$F' = 2V/d \qquad (15)$$

This frequency is the same as the frequency of of the laser beam impinging upon the first diffraction grating 10 perpendicularly thereto (see formula (12)). It is therefore understood that the Doppler frequency has no dependency on the angle $\theta_i$ of incidence of the laser beam. The positions of the light spots 81 and 82 are not changed even when the emission wavelength $\lambda$ of the laser diode 1 is changed. Thus, the overlapping state of the two light spots on the object 7 is constantly maintained when the distance between the light-receiving surfaces of the first diffraction grating 10 and the second diffraction grating 191 is held equal to the distance between the light receiving surfaces of the third diffraction grating 192 and the object 7.

In Fig. 21, the first diffraction grating 10 is held such that its light-receiving surface is parallel to the object 7, while the second and third diffraction gratings 191 and 192 are situated such that their light-receiving surfaces are inclined at an angle $\theta_j$ to the planes parallel to the light-receiving surface of the first diffraction grating 10. Thus, the light-receiving surfaces of the second and third diffraction gratings 191, 192 are parallel to each other. Representing the angle of inclination of the diffracted lights 71 and 72 to the optical axis by $\theta$, these diffracted lights meet the following condition of formula (16) and advance towards the third diffraction grating 192 along the mutually parallel paths of light. Finally, the diffracted lights 71 and 72 impinge upon the object 7 at an incident angle $\theta_n$. Thus, the Doppler frequency F obtained in this case is the same as that derived from the formula (12). It is therefore understood that the positions of the light spots on the object 7 are maintained unchanged independently of the inclination of the light-receiving surfaces of the second and third diffraction gratings 191 and 192 relative to the diffracted lights 61, 62 of the orders ± 1, provided that these light-receiving surfaces are parallel to each other.

The velocity meters shown in Figs. 19 to 21 make use of the diffracted lights of the order ± 1. This, however, is only illustrative and the velocity meters shown in these Figures can be constructed in such a manner as to utilize the diffracted lights of orders ± 1 or ± 2. It is also possible to arrange such that photo-detector 9 receives, through the lens 8, the lights transmitted and scattered by the object 7, although the velocity meters shown in Figs. 19, 20 and 21 are arranged to receive the lights reflected and scattered by the object 7.

In the embodiment shown in Fig. 19, the second and the third diffraction gratings 191 and 192 may be provided on independent substrates. It is, however, advisable to form the second and the third diffraction gratings 191 and 192 on upper and lower surfaces of the plastic substrate so that these diffraction gratings 191, 192 can easily be set up in relation to each other.

In the embodiments shown in Figs. 19 to 21, it is possible to detect the Doppler frequency without being affected by any change in the wavelength of the laser beam, while suppressing deviation of the two lights spots formed on the object, by virtue of the provision of a plurality of diffraction gratings. It is thus possible to obtain a highly accurate laser Doppler velocity meter capable of detecting velocity with a high degree of precision.

In addition, the design is appreciably facilitated because the points to which two beams are applied can be determined by many variable factors: namely, at least the constructions and positions of three diffraction gratings.

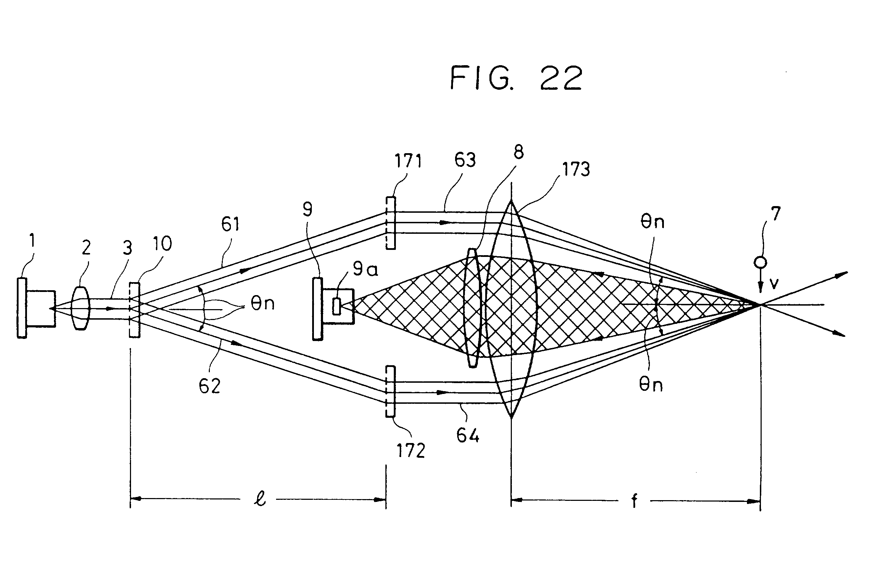

Fig. 22 is a schematic illustration of an example of a laser Doppler velocity meter designed for measuring fluid velocity. In this Figure, the same reference numerals are used to denote the same components as these used in the velocity meter shown in Fig. 5. In this example, therefore, the object 7 is a fluid flowing at a velocity V, while the diffraction grating denoted at 10 is a grating which is capable of generating transmitted diffracted lights.

The diffraction grating 10 will be referred to as "first diffraction grating 10", hereinafter. Numerals 171 and 172 denote second diffraction gratings, while 173 denotes a condenser lens 173. The first diffraction grating 10 and the second diffraction gratings 171 and 172 have the same grating pitch and the same direction of arrangement of grating. The first and second diffraction gratings 10, 171 and 172 are disposed such that axes perpendicular to the light-receiving surfaces of the first, second and third diffraction gratings 10, 171 and 172 are parallel to the optical axes of the lenses 2, 8 and 173. The distance between the light-receiving surface of the first diffraction grating 10 and those of the second diffraction $\ell$ gratings 171, 172 along the above-mentioned optical axis and the distance between the lens 173 and the object 7 are equal to the focal distance $f_1$ of the lens 173. In this embodiment, the positions of the first and second diffraction gratings 10, 171 and 172 are determined to meet the condition of $\ell = f$. This, however, is not exclusive and the positions of the diffraction gratings may be determined so as not to meet the condition of $\ell = f$.

The laser beam emitted from the laser diode 1 is collimated through a collimator lens 2 into a collimated light beam 3 which impinges upon the light-receiving surface of the diffraction grating 10 perpendicularly thereto. The diffraction grating 10 diffracts the incident light beam 3 so that a diffracted light 61 of the order +1 and a diffracted light 62 of the order -1 are emitted from the diffraction grating 10 at an emission angle (diffraction angle) $\theta_n$. The diffracted light 61 of the order +1 impinges upon the second diffraction grating 171 and is diffracted by the latter so as to be emitted from this diffraction grating 171 in a direction substantially parallel to the optical axis of the lenses 8 and 173. On the other hand. On the other hand, the diffracted light 62 of the order -1 impinges upon the second diffraction grating 172 and is diffracted by the latter so as to be emitted from this diffraction grating 172 in a direction substantially parallel to the optical axis of the lenses 8 and 173.

Thus, the diffracted lights 61 and 62 of the orders ±1 are diffracted by the second diffraction gratings 171 and 172, respectively, at the diffraction angle $\theta_n$. The diffracted light 64 of the order +1 from the diffraction grating 171 and the diffracted light 64 from the diffraction grating 172 run along optical paths which are parallel to each other, so as to impinge upon peripheral portions of the lens 173. The lens 173 deflects and condenses the diffracted lights 63 and 64 of the orders ±1 and direct them to the focal point of the lens 173. Consequently, the diffracted lights 63 and 64 of the orders ±1 are superposed at the focal point of the lens 173 so as to form light spots. The angles of incidence of both diffracted lights 63, 64 of the orders ±1 are $\theta_n$ which is equal to the angle of emission of the respective diffracted lights from the diffraction grating 10. The diffracted lights of the orders ±1 can be regarded as being materially parallel to each other in the region adjacent to the focal point.

The object 7 moves at a position which is spaced from the lens 173 by a distance f, i.e., across the focal point of the lens 173, so that the light spots are formed by the diffracted lights 63, 64 of the orders ±1 on the object 7. The lights thus applied to the object 7 are scattered by the obejct and are collimated through the lens 173 and then directed to the light-receiving portion 9a of the photo-detector 9 through the lens 8. Thus, the light-rceiving portion 9a of the photo-detector 9 receives an interference light which contains both the scattered light generated as a result of application of the diffracted light 63 of the order +1 and the scattered light produced as a result of application of the diffracted light 64 of the order -1. The photo-detector 9 then photo-electrically converts this interference light and then produces a signal corresponding to Doppler frequency.

In the described Fig. 22 example, the lenses 8 and 173 are arranged so as to project the image of the object 7 to the light-receiving portion 9a of the photo-detector 9, so that the scattered lights from the object 7 are efficiently received by the light-receiving portion 9a. These lenses 8 and 173 may be so arranged as to project the image in real size or in a greater or smaller scale.

In this example, the optical system is arranged such that the angle formed between the diffracted lights 61 and 62 of the orders ±1 emitted from the diffraction grating 10 is equal to the angle formed between the diffracted lights 63 and 64 of the orders ±1 incident to the object 7. This angle varies in accordance with a change in the frequency, i.e., the wavelength $\lambda$, of the laser beam to meet the condition of $\sin \theta_n / \lambda$.

Therefore, the Doppler frequency F of the interference light is determined by th aforementioned formula (5). It is therefore possible to obtain from the photo-detector 9 a signal which exactly corresponds to the Doppler frequency without being affected by any change in the frequency of the laser beam.

In this example, as shown in Fig. 22, the optical system 171, 172, 173, which causes the diffracted lights 61, 62 (64, 64) of the orders ±1 emitted from the diffraction grating 10 to be applied to the object 7, is arranged so as to substantially attain an optically conjugate relation between the light-receiving surface of the diffraction grating 10 and the object 7. Therefore, the diffracted lights 63 and 64 of the orders ±1 can always be efficiently superposed on each other at the surface of the object 7, regardless of any change in the diffraction angle of the diffracted lights 61 and 62 of the orders ±1 caused by a change in the frequency of the laser beam. It is thus possible to eliminate deviations of the light spots formed by the diffracted lights 63 and 64 of the orders ±1, as in the case of the seventh embodiment described before. This makes it possible to efficiently direct the interference light to the light-receiving portion 9a of the photo-detector 9, thus offering a high detection sensitivity of the velocity meter.

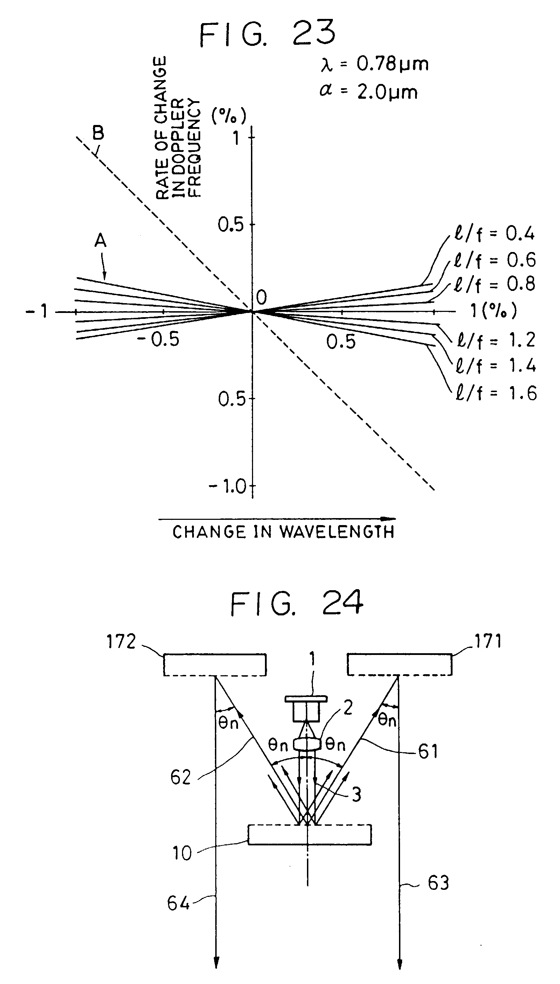

In the velocity meter example shown in Fig. 22, the distance $\ell$ between the first diffraction grating 10 and the second diffraction gratings 171, 172 is determined to be equal to the focal distance f of the lens 173. However, even if the above-mentioned distance $\ell$ is not equal to the focal distance f, the amount of change in the Doppler frequency in response to a change in the frequency (wavelength) of the laser beam is extremely small as shown in Fig. 23, provided that the system is designed and arranged in accordance with the concept of the present invention. Fig. 23 shows the amount of change in the Doppler frequency F caused by a change in the wavelength of the laser beam, using the ratio $\ell$/f as a parameter, when the wavelength $\lambda$ of the laser beam, grating pitch d and the number n of order of refraction are determined as A = 0.78 pm, d = 2 pm and n = 1.

In this Figure, a broken-line curve B shows the characteristic of a conventional velocity meter shown in Fig. 1. It will be seen that, in this conventional velocity meter, the Doppler frequency is changed in proportion to a change in the wavelength of the laser beam. In contrast, in the velocity meter of the present invention, the amount of change in the Doppler frequency in response to a change in the wavelength of the laser beam is very small even when the the distance $\ell$ between the first diffraction grating 10 and the second diffraction gratings 171, 172 is not equal to the focal distance f of the lens 173. It is therefore possible to suitably set the distance $\ell$ between the first diffraction grating 10 and the second diffraction gratings 171, 172.

Fig. 24 is a fragmentary schematic illustration of an eight embodiment of a laser Doppler velocity meter according to the present invention, developed by modification of the velocity meter example as shown in Fig. 22. In this modification, reflection-type diffraction gratings are used as the diffraction gratings 10, 171 and 172. Other components of the modification shown in Fig. 24 are materially the same as those shown in Fig. 22. Various forms of the reflection-type diffraction gratings 10, 171 and 172 are adoptable as explained before in connection with Fig. 5.

Referring to Fig. 24, the laser beam emitted from the laser diode 1 is collimated into a beam 3 through a collimator lens 2. The collimated beam impinges upon the light-receiving surface of the first diffraction grating 10 perpendicularly thereto. The first diffraction grating 10 reflects and diffracts the incident collimated beam 3 so that diffracted lights 61 and 62 of the orders $\pm 1$ are emitted from the first diffraction grating 10 at a diffraction angle $\theta_n$. The diffracted beam 61 of the order +1 obliquely impinges upon the second diffraction grating 171 and is reflection-diffracted by this grating and emitted therefrom in a direction parallel to the optical axis of the collimator lens 2. On the other hand, the diffracted beam 62 of the order -1 obliquely impinges upon the second diffraction grating 172 and is reflection-diffracted by this grating and emitted therefrom in a direction parallel to the optical axis of the collimator lens 2. The diffraction angles of these diffracted lights 61 and 62 of the orders $\pm 1$ are the same and equal to the above-mentioned diffraction angle $\theta_n$. The diffracted lights 63, 64 of the orders $\pm 1$ from the second diffraction gratings 171, 172 are collimated beams and are made incident to the lens 173 (see Fig. 22). The portions of the system on the light output side of the second diffraction gratings 171, 172 are exactly the same as those in the velocity meter shown in Fig. 22 and detailed description of such portions is therefore omitted.

A description will be given of another form of the embodiment which makes use of a reflection-type diffraction grating as the first diffraction grating 10 as in the embodiment shown in Fig. 24. In the arrangement shown in Fig. 24, the laser diode 1 and the collimator lens 2 are disposed on the side of the first diffraction grating 10 opposite to the lens 173. This arrangement, however, may be changed such that the laser diode 1 and the collimator lens 2 are disposed on the same side of the first diffraction grating as the lens 173, as shown in Fig. 5. In such a case, the second diffraction gratings 171, 172 and the components on the output side of the second diffraction gratings 171, 172 are arranged in the same manner as those in Fig. 22. This arrangement is preferred since the whole velocity meter can have a compact design.

In a preferred form of the present invention, the laser beam from the laser diode is converged on the light-receiving surface of the first diffraction grating through a lens having a comparatively large focal distance so that the diffracted lights of the orders $\pm 1$ are emitted from the first diffraction grating in a diverging manner. These two diffracted lights are then deflected by the lens so as to become parallel light beams which are directed to the respective second diffraction gratings. These diffracted lights are then diffracted by the second diffraction gratings so as to be directed to the same point on the object.

Some of the velocity meters described hereinabove employs a pair of second diffraction gratings such that each second diffraction grating receives one of the diffracted lights of orders $\pm 1$. The use of two separate diffraction gratings, however, are not exclusive. Namely, it is possible to use a single diffraction grating having a comparatively large length, in lace of the pair of separate gratings.

It is also to be understood that the diffracted lights to be applied to the object 7 may be of orders such as $\pm 2$, $\pm 3$ and so on, although diffracted lights of orders $\pm 1$ are specifically mentioned in the foregoing description.

In addition, the flow velocity meter of the present invention may be arranged so as to detect the light transmission-scattered by the object, although the described embodiments are arranged to sense light reflection-scattered by the object.

Although in the described embodiments the optical systems are composed of lenses and diffraction gratings, these optical systems can employ reflection mirrors in place of the described components of these optical systems. Other modifications are also possible. For instance, the single lenses 2, 8 and 173 used in the embodiments shown in Figs. 5 and 24 may be replaced with a single optical system composed of a plurality of elementary lenses.

In the embodiments described hereinbefore, a single laser beam from a laser diode is divided into a plurality of beams and directed to preselected directions by a diffraction grating. This arrangement, however, maybe modified such that a single laser beam is divided into a desired number of beams necessary for the velocity measurement, and these beams are then diffracted and deflected by diffraction means. In such a case, the arrangement may be such that one diffraction grating used for each of the beams or a single diffraction grating for a plurality of beams as in the described embodiments.

Thus, various changes and modifications of velocity meter are possible according to the spirit of the invention.

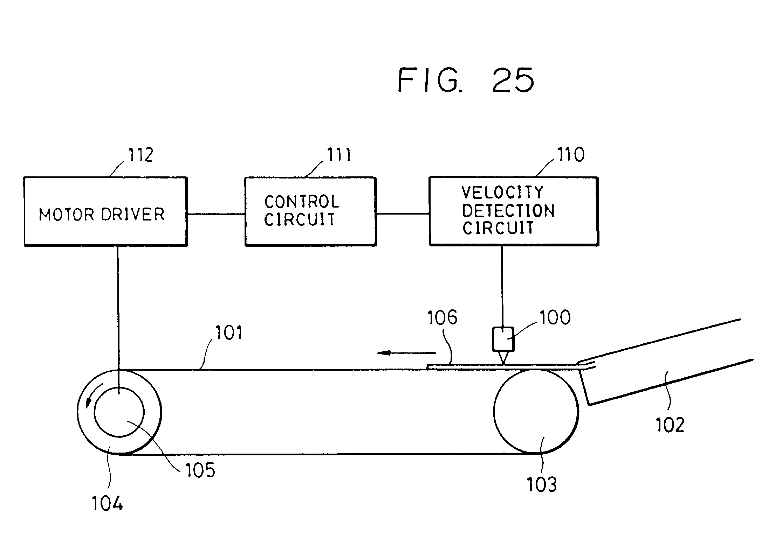

Fig. 25 is a schematic illustration of a system incorporating a velocity meter of the present invention, for the purpose of control of a recording paper in a facsimile.

In Fig. 25, the velocity meter of the invention, generally denoted by a numeral 100, can have any one of the first to eighth embodiments described hereinbefore. A paper supply unit 102 is capable of supplying a sheet of recording paper 106 onto a belt 101 which is stretched between a belt roller 104 which is supported by the chassis of the facsimile and a drive roller 104 which is connected to and driven by a drive motor 105 in the direction of an arrow thereby driving the belt 101.

The paper 106 supplied from the paper supply unit 102 is placed on the belt 101 so as to be moved in the direction of an arrow as the belt 101 runs. The velocity meter 100 is adapted to apply a laser beam to the surface of the moving paper 106 or a portion of the surface of the belt 101 and to receive the light reflection-scattered by the paper 106 or the belt 101, in a manner explained before in connection with first to eighth embodiment. In this embodiment, the output signal from the photo-detector of the velocity meter 100, corresponding to the Doppler frequency, is input to a velocity detection circuit 110 of the facsimile. The velocity detection circuit 110 detects the velocity of movement of the paper 106 or the belt 101 on the basis of the frequency of the output signal derived from the photo-detector. The velocity information thus obtained from the circuit 110 is input to a control circuit 111 which controls the speed of the drive motor 105 through a motor driver 112. More specifically, the control circuit 111 inputs a correction signal to the driver 112 which then controls the speed of operation of the drive motor 118 so as to maintain a constant moving velocity of the belt 101 and, hence, of the paper 106. This makes it possible to eliminate various problems encountered with a known facsimile which relies solely on a feedback control of the drive roller, such as a periodical change in the moving velocity of the belt attributable to a slight eccentricity of the drive roller. Thus, the feed of the recording paper at constant velocity can be effected with a higher degree of precision, by virtue of use of the velocity meter of the present invention.

The velocity meter of the present invention, which is small in size and which can be assembled from a small number of parts as described before, is inexpensive and can be effectively used in a facsimile or other image recording apparatus without substantially raising the cost of such apparatus.

Referring again to Fig. 25, an image is recorded by a print head (not shown) on the paper 106 which is being fed at a constant speed. Since the feed of the paper 106 is conducted at an exactly constant velocity in the direction of sub-scanning during recording, it is possible to obtain a high quality of the recorded image.

In the embodiment shown in Fig. 25, the velocity meter of the present invention is used for the purpose of recording (printing) of an image in a facsimile as a typical example of image recording apparatus. This, however, is only illustrative and the velocity meter of the present invention can be used also for the purpose of reading of an image.

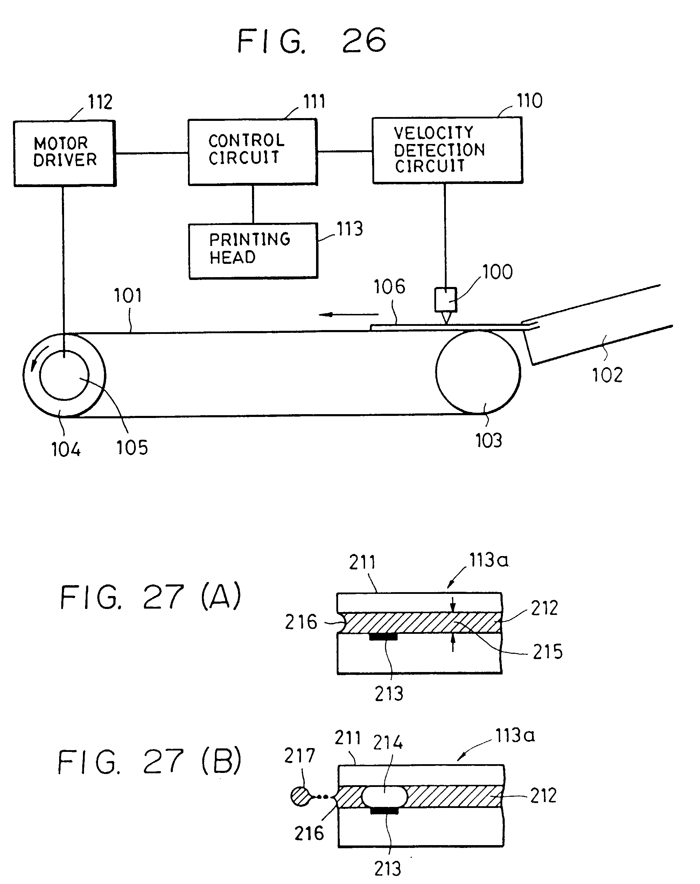

Fig. 26 schematically shows a system in which a velocity meter in accordance with the present invention is used for controlling the timing of recording of a bubble jet printer.

In Fig. 26, the velocity meter of the invention, generally denoted by a numeral 100, can have any one of the first to eighth embodiments described hereinbefore. A paper supply unit 102 is capable of supplying a sheet of recording paper 106 onto a belt 101 which is stretched between a belt roller 104 which is supported by the chassis of the facsimile and a drive roller 104 which is connected to and driven by a drive motor 105 in the direction of an arrow thereby driving the belt 101.

The paper 106 supplied from the paper supply unit 102 is placed on the belt 101 so as to be moved in the direction of an arrow as the belt 101 runs. The velocity meter 100 is adapted to apply a laser beam to the surface of the moving paper 106 or a portion of the surface of the belt 101 and to receive the light reflected and scattered by the paper 106 or the belt 101, in a manner explained before in connection with first to eighth embodiment. In this embodiment, the output signal from the photo-detector of the velocity meter 100, corresponding to the Doppler frequency, is input to a velocity detection circuit 110 of the facsimile. The velocity detection circuit 110 detects the velocity of movement of the paper 106 or the belt 101 on the basis of the frequency of the output signal derived from the photo-detector. The velocity information derived from the circuit 110 is input to a control circuit 111 which controls the timing of the recording operation performed by a recording head 113 for recording an image on the paper 106.

Figs. 27A and 27B are sectional views of an essential portion of the recording head 113 shown in Fig. 26.

The recording head has a head unit 211 which carries a heat-generating element 213 which converts electric energy supplied thereto into heat energy and delivers the heat energy to a recording ink 212. Numeral 214 denotes a bubble formed in the ink, while 215 denotes a discharge passage.

In operation, the heat-generating element 213 generates a heat energy in an amount corresponding to the electric energy supplied thereto, and delivers the heat energy to the recording ink 212, so that the bubble 214 is formed in the ink in the ink discharge passage. The bubble 214 displaces the ink so that an ink droplet 217 is discharged from a discharge port 216 onto the surface of a recording medium, e.g., the paper 206, whereby a dot of ink is formed on the surface of the recording medium.

The control circuit 111 used in the embodiment shown in Fig. 26 is capable of changing the timing of supply of the electric energy to the heat-generating element 213 thus controlling the timing of the recording operation. The recording head 113 has a multiplicity of head units of the type shown in Fig. 27 arrayed in a direction parallel to the surface of the recording medium,such that each head unit corresponds to one pixel or dot of the image to be formed. It is therefore possible to record a desired dot pattern in the direction of main scanning perpendicular to the drawing sheet of Fig. 26 on the paper 106 which is moved along a path immediately under the recording head 113 as viewed in Fig. 26. This recording operation of the recording head 113 is conducted at a predetermined recording timing during the movement of the paper 106 in the direction of sub-scanning, i.e., in a direction shown by an arrow, so that dot patterns are formed on the successive main scanning lines,whereby a two-dimensional image is recorded on the paper 106.

The velocity of movement of the paper 106 (belt 101) is detected by the velocity meter 100 and the circuit 110 as explained before, and thus obtained velocity information is supplied to the control circuit 111. The control circuit 111 then compares with the detected velocity with a reference paper feeding velocity $V_0$. When the reference velocity $V_0$ is exceeded by the detected velocity, the control circuit 111 operates so as to advance the timing of recording operation of the recording head 113, whereas, when the detected velocity of the paper is lower than the reference velocity $V_0$, the control circuit 111 operates so as to delay the recording timing. The control of the recording timing performed by the control circuit 111 makes it possible to obtain a constant pitch of dot patterns also in the sub-scanning direction, thus ensuring high quality of the recorded image.

## Claims

1. A laser doppler velocimeter comprising

   beam applying means (1, 2, 10) including a beam source means (1) for supplying a laser beam (l), a diffraction grating (10) arranged to be impinged by the laser beam from said beam source means and for generating diffracted beams, and means (6, 6'; 191, 192) for deflecting said diffracted beams propagating from said diffraction grating (10) to an object (7), said beam applying means (1, 2, 10) being arranged to apply said diffracted beams to said object (7) and thereby change the angles of incidence of said diffracted beams to said object in accordance with a change in the wavelength of said laser beam (l) from said beam source means (1) so as to substantially compensate for a change in said frequency shift caused by said change in said wavelength, and detecting means (8, 9) for detecting a reflected scattered beam generated by reflection of said diffracted beams from said object (7), wherein said reflected scattered beam is constituted of a first scattered beam generated by a first one of said diffracted beams and a second scattered beam generated by a second one of said diffracted beams, and for producing a signal on the basis of an interference of said diffracted beams and on the basis of a frequency shift of the detected scattered beam which is proportional to the velocity of said object (7), wherein the information on the velocity of said object (7) is detected according to said signal,

   **characterized in that**

   said diffraction grating is a reflective diffraction grating, and
   said beam source means (1) is disposed for projecting the laser beam (l) from a position substantially between a first portion on which the laser beam (l) impinges on said reflective diffraction grating (10) and a second portion on which said diffracted beams impinge on the object (7), said first and second portions being substantially or almost opposite to each other such that said laser beam and said diffracted beams impinge on said first and second portions in substantially reverse direction.

2. A laser Doppler velocimeter according to claim 1, characterized in that said beam source means (1) comprises a semiconductor laser.

3. A laser Doppler velocimeter according to claim 1, characterized in that said detecting means (8, 9) comprises converting means for receiving an interference beam generated by interference of said first and second scattered beams and converting them into signals.

4. A laser Doppler velocimeter according to claim 3, characterized in that said means for deflecting comprises two reflecting planes (6, 6') arranged in parallel to each other for reflecting said diffraction beams from said diffraction grating (10) so that they cross on said object (7), both of said reflecting planes (6, 6') intersecting perpendicularly to the direction of arrangement of said diffraction grating (10).

5. A laser Doppler velocimeter according to claim 3, characterized in that said means for deflecting comprises at least one diffraction grating (191, 192) for deflecting said diffraction beams from said diffraction grating (10) so that said diffraction beams cross on said object (7).

6. An image recording apparatus comprising

feeding means (101, 104, 105) for feeding a recording medium (106),
recording means (113) for recording an image on said recording medium (106) which is being fed by said feeding means (101; 104, 105), and
a laser doppler velocimeter (100) for producing an output signal which indicates the velocity of feed of said recording medium (106), said laser doppler velocimeter comprising
beam applying means (1, 2, 10) including a beam source means (1) for supplying a laser beam (l), a diffraction grating (10) arranged to be impinged by the laser beam from said beam source means and for generating diffracted beams, and means (6, 6'; 191, 192) for deflecting said diffracted beams propagating from said diffraction grating (10) to said recording medium (106), said beam applying means (1, 2, 10) being arranged to apply said diffracted beams to said recording medium (106) and thereby change the angles of incidence of said diffracted beams to said recording medium in accordance with a change in the wavelength of said laser beam (l) from said beam source means (1) so as to substantially compensate for a change in said frequency shift caused by said change in said wavelength, and
detecting means (8, 9) for detecting a reflected scattered beam generated by reflection of said diffracted beams from said recording medium (106), wherein said reflected scattered beam is constituted of a first scattered beam generated by a first one of said diffracted beams and a second scattered beam generated by a second one of said diffracted beams, and for producing the output signal on the basis of an interference of said diffracted beams and on the basis of a frequency shift of the detected scattered beam which is proportional to the velocity of said recording medium (106),

**characterized in that**

said diffraction grating is a reflective diffraction grating, and
said beam source means (1) is disposed for projecting the laser beam (l) from a position substantially between a first portion on which the laser beam (l) impinges on said reflective diffraction grating (10) and a second portion on which said diffracted beams impinge on said recording medium (106), said first and second portions being substantially or almost opposite to each other such that said laser beam and said diffracted beams impinge on said first and second portions in substantially reverse direction.

**Patentansprüche**

1. Laser-Doppler-Geschwindigkeitsmesser, umfassend

eine Strahlzufuhreinrichtung (1, 2, 10), beinhaltend eine Strahl-Quelleinrichtung (1) zum Zuführen eines Laserstrahls (l), ein Streugitter (10), welches so ausgelegt ist, daß es von dem Laserstrahl aus der Laser-Quelleinrichtung getroffen wird und gestreute Strahlen generiert, und eine Einrichtung (6', 191, 192) zum Ablenken der gestreuten Strahlen, die sich von dem Streugitter (10) zu einem Objekt (7) ausbreiten, wobei die Strahlzufuhreinrichtung (1, 2, 10) derart ausgebildet ist, daß sie das Objekt (7) mit den gestreuten Strahlen beaufschlagt und dabei die Einfallswinkel der gestreuten Strahlen auf das Objekt in Übereinstimmung mit einer Änderung der Wellenlänge des Laserstrahls (l) aus der Strahl-Quelleinrichtung (1) derart ändert, daß eine Änderung der Frequenzverschiebung, die durch die Änderung der Wellenlänge verursacht wird, im wesentlichen kompensiert wird, und
eine Erfassungseinrichtung (8, 9) zum Erfassen eines reflektieren einzelnen Strahls, der durch Reflektion der von dem Objekt (7) gestreuten Strahlen erzeugt wird, wobei der reflektierte einzelne Strahl aus einem ersten einzelnen Strahl, der durch einen ersten der gestreuten Strahlen erzeugt wird, und einem zweiten einzelnen Strahl, der durch einen zweiten der gestreuten Strahlen erzeugt wird, besteht, und zum Erzeugen eines Signals auf der Grundlage einer Interferenz der gestreuten Strahlen sowie auf der Grundlage einer Frequenzverschiebung des erfaßten einzelnen Strahls, die proportional zu der Geschwindigkeit des Objekts (7) ist, wobei die Information über die Geschwindigkeit des Objekts (7) in Übereinstimmung mit dem Signal erfaßt wird,

**dadurch gekennzeichnet, daß**

das Streugitter ein reflektierendes Streugitter ist, und
die Strahl-Quelleinrichtung (1) derart angeordnet ist, daß sie den Laserstrahl (l) aus einer Position im wesentlichen zwischen einem ersten Abschnitt, in dem der Laserstrahl (l) auf das reflektierende Streugitter (10) auftrifft, und einem zweiten Abschnitt, in dem dem die gestreuten Strahlen auf das Objekt (7) auftreffen, projiziert, wobei der erste und der zweite Abschnitt derart im wesentlichen einander nahezu gegenüberliegen, daß der Laserstrahl und die gestreuten Strahlen auf den ersten und den zweiten Abschnitt in im wesentlichen entgegengesetzter Richtung auftreffen.

2. Laser-Doppler-Geschwindigkeitsmesser nach Anspruch 1, dadurch gekennzeichnet, daß die Strahl-Quelleinrichtung (1) einen Halbleiter-Laser umfaßt.

3. Laser-Doppler-Geschwindigkeitsmesser nach Anspruch 1, dadurch gekennzeichnet, daß die Erfassungseinrichtung (8, 9) eine Umwandlungseinrichtung zum Empfangen eines Interferenzstrahls, der durch Interferenz des ersten und des zweiten einzelnen Strahls und Umwandeln derselben in Signale erzeugt wird, umfaßt.

4. Laser-Doppler-Geschwindigkeitsmesser nach Anspruch 3, dadurch gekennzeichnet, daß die Ablenkeinrichtung zwei Ablenkebenen (6, 6') umfaßt, die parallel zueinander angeordnet sind zum Reflektieren der Streustrahlen des Streugitters (10) derart, daß sich diese auf dem Objekt (7) kreuzen, wobei sich beide der reflektierenden Ebenen (6, 6') senkrecht bezüglich der Ausrichtungsrichtung des Streugitters (10) schneiden.

5. Laser-Doppler-Geschwindigkeitsmesser nach Anspruch 3, dadurch gekennzeichnet, daß die Ablenkeinrichtung zumindest ein Streugitter (191, 192) umfaßt zum Ablenken der gestreuten Strahlen aus dem Streugitter (10) derart, daß sich die gestreuten Strahlen auf dem Objekt (7) kreuzen.

6. Bildaufzeichnungsvorrichtung, umfassend

eine Zuführeinrichtung (101, 104, 105) zum Zuführen eines Aufzeichnungsmediums (106),
eine Aufzeichnungseinrichtung (113) zum Aufzeichnen eines Bilds auf dem Aufzeichnungsmedium (106), das durch die Zuführeinrichtung (101, 104, 105) zugeführt wird, und
einen Laser-Doppler-Geschwindigkeitsmesser (100) zum Erzeugen eines Ausgangssignals, welches die Zufuhrgeschwindigkeit des Aufzeichnungsmediums (106) angibt, wobei der Laser-Doppler-Geschwindigkeitsmesser umfaßt:
eine Strahlzufuhreinrichtung (1, 2, 10), beinhaltend eine Strahl-Quelleinrichtung (1) zum Zuführen eines Laserstrahls (l), ein Streugitter (10), welches so ausgelegt ist, daß es von dem Laserstrahl aus der Laser-Quelleinrichtung getroffen wird und gestreute Strahlen generiert, und eine Einrichtung (6', 191, 192) zum Ablenken der gestreuten Strahlen, die sich von dem Streugitter (10) zu dem Aufzeichnungsmedium (106) ausbreiten, wobei die Strahlzufuhreinrichtung (1, 2, 10) derart ausgebildet ist, daß sie das Aufzeichnungsmedium (106) mit den gestreuten Strahlen beaufschlagt und dabei die Einfallswinkel der gestreuten Strahlen auf das Aufzeichnungsmedium in Übereinstimmung mit einer Änderung der Wellenlänge des Laserstrahls (l) aus der Strahl-Quelleinrichtung (1) derart ändert, daß eine Änderung der Frequenzverschiebung, die durch die Änderung der Wellenlänge verursacht wird, im wesentlichen kompensiert wird, und
eine Erfassungseinrichtung (8, 9) zum Erfassen eines reflektieren einzelnen Strahls, der durch Reflektion der von dem Aufzeichnungsmedium (106) gestreuten Strahlen erzeugt wird, wobei der reflektierte einzelne Strahl aus einem ersten einzelnen Strahl, der durch einen ersten der gestreuten Strahlen erzeugt wird, und einem zweiten einzelnen Strahl, der durch einen zweiten der gestreuten Strahlen erzeugt wird, besteht, und zum Erzeugen eines Signals auf der Grundlage einer Interferenz der gestreuten Strahlen sowie auf der Grundlage einer Frequenzverschiebung des erfaßten einzelnen Strahls, die proportional zu der Geschwindigkeit des Aufzeichnungsmediums (106) ist,

**dadurch gekennzeichnet, daß**

das Streugitter ein reflektierendes Streugitter ist, und
die Strahl-Quelleinrichtung (1) derart angeordnet ist, daß sie den Laserstrahl (l) aus einer Position im wesentlichen zwischen einem ersten Abschnitt, in dem der Laserstrahl (l) auf das reflektierende Streugitter (10) auftrifft, und einem zweiten Abschnitt, in dem die gestreuten Strahlen auf das Aufzeichnungsmedium (106) auftreffen, projiziert, wobei der erste und der zweite Abschnitt derart im wesentlichen einander nahezu gegenüberliegen, daß der Laserstrahl und die gestreuten Strahlen auf den ersten und den zweiten Abschnitt in im wesentlichen entgegengesetzter Richtung auftreffen.

**Revendications**

1. Vélocimètre à laser à effet Doppler comportant

   des moyens (1, 2, 10) d'application de faisceau comprenant un moyen (1) à source de faisceau destiné à fournir un faisceau laser (l), un réseau de diffraction (10) disposé de façon à être atteint par le faisceau laser provenant dudit moyen à source de faisceau et destiné à générer des faisceaux diffractés, et des moyens (6, 6' ; 191, 192) destinés à dévier lesdits faisceaux diffractés se propageant depuis ledit réseau de diffraction (10) vers un objet (7), lesdits moyens (1, 2, 10) d'application de faisceau étant agencés de façon à appliquer lesdits faisceaux diffractés audit objet (7) et à modifier ainsi les angles d'incidence desdits faisceaux diffractés sur ledit objet en fonction d'une variation de la longueur d'onde dudit faisceau laser (l) provenant dudit moyen (1) à source de faisceau pour compenser sensiblement une variation dudit décalage de fréquence provoquée par ladite variation de ladite longueur d'onde, et
   des moyens de détection (8, 9) destinés à détecter un faisceau diffusé et réfléchi généré par réflexion desdits faisceaux diffractés à partir dudit objet (7), ledit faisceau diffusé et réfléchi étant constitué d'un premier faisceau diffusé généré par un premier desdits faisceaux diffractés et d'un second faisceau diffusé généré par un second desdits faisceaux diffractés, et à produire un signal sur la base d'une interférence desdits faisceaux diffractés et sur la base d'un décalage de fréquence du faisceau diffusé détecté qui est proportionnel à la vitesse dudit objet (7), l'information de vitesse dudit objet (7) étant détectée conformément audit signal,

   caractérisé en ce que

   ledit réseau de diffraction est un réseau de diffraction par réflexion, et
   ledit moyen (1) à source de faisceau est disposé de façon à projeter le faisceau laser (l) depuis une position située sensiblement entre une première partie sur laquelle le faisceau laser (l) tombe sur ledit réseau (10) de diffraction par réflexion et une seconde partie sur laquelle lesdits faisceaux diffractés tombent sur l'objet (7), lesdites première et seconde parties étant sensiblement ou à peu près opposées l'une à l'autre de façon que ledit faisceau laser et lesdits faisceaux diffractés tombent sur lesdites première et seconde parties en sens sensiblement inverse.

2. Vélocimètre à laser à effet Doppler selon la revendication 1, caractérisé en ce que ledit moyen (1) à source de faisceau comprend un laser à semiconducteur.

3. Vélocimètre à laser à effet Doppler selon la revendication 1, caractérisé en ce que lesdits moyens de détection (8, 9) comprennent un moyen de conversion destiné à recevoir un faisceau d'interférence généré par une interférence desdits premier et second faisceaux diffusés et à les convertir en signaux.

4. Vélocimètre à laser à effet Doppler selon la revendication 3, caractérisé en ce que lesdits moyens de déviation comprennent deux plans réfléchissants (6, 6') agencés parallèlement l'un à l'autre pour réfléchir lesdits faisceaux de diffraction provenant dudit réseau de diffraction (10) afin qu'ils se croisent sur ledit objet (7), lesdits deux plans de réflexion (6, 6') coupant perpendiculairement la direction de l'agencement dudit réseau (10) de diffraction.

5. Vélocimètre à laser à effet Doppler selon la revendication 3, caractérisé en ce que lesdits moyens de déviation comprennent au moins un réseau de diffraction (191, 192) destiné à dévier lesdits faisceaux de diffraction provenant dudit réseau de diffraction (10) afin que lesdits faisceaux de diffraction se croisent sur ledit objet (7).

6. Appareil d'enregistrement d'images comportant

   des moyens d'avance (101, 104, 105) destinés à faire avancer le support d'enregistrement (106),
   des moyens d'enregistrement (113) destinés à enregistrer une image sur ledit support d'enregistrement (106) qui est avancé par lesdits moyens d'avance (101, 104, 105), et

un vélocimètre (100) à laser à effet Doppler destiné à produire un signal de sortie qui indique la vitesse d'avance dudit support d'enregistrement (106), ledit vélocimètre à laser à effet Doppler comportant

des moyens (1, 2, 10) d'application du faisceau comprenant un moyen (1) à source de faisceau destiné à fournir un faisceau laser (I), un réseau de diffraction (10) agencé de façon à être atteint par le faisceau laser provenant dudit moyen à source de faisceau et à générer des faisceaux diffractés, et des moyens (6, 6' ; 191, 192) destinés à dévier lesdits faisceaux diffractés se propageant depuis ledit réseau de diffraction (10) jusqu'audit support d'enregistrement (106), lesdits moyens (1, 2, 10) d'application de faisceau étant agencés pour appliquer lesdits faisceaux diffractés audit support d'enregistrement (106) et faire varier ainsi les angles d'incidence desdits faisceaux diffractés sur ledit support d'enregistrement en fonction d'une variation de la longueur d'onde dudit faisceau laser (I) provenant dudit moyen (1) à source de faisceau pour compenser sensiblement une variation dudit décalage de fréquence provoqué par ladite variation de ladite longueur d'onde, et

des moyens de détection (8, 9) destinés à détecter un faisceau diffusé et réfléchi généré par réflexion desdits faisceaux diffractés à partir dudit support d'enregistrement (106), ledit faisceau diffusé et réfléchi étant constitué d'un premier faisceau diffusé généré par un premier desdits faisceaux diffractés et par un second faisceau diffusé généré par un second desdits faisceaux diffractés, et à produire le signal de sortie sur la base d'une interférence desdits faisceaux diffractés et sur la base d'un décalage de fréquence dudit faisceau diffusé détecté, qui est proportionnel à la vitesse dudit support d'enregistrement (106),

caractérisé en ce que

ledit réseau de diffraction est un réseau de diffraction par réflexion, et

ledit moyen (1) à source de faisceau est disposé de façon à projeter le faisceau laser (I) depuis une position située sensiblement entre une première partie sur laquelle le faisceau laser (I) tombe sur ledit réseau (10) de diffraction par réflexion et une seconde partie sur laquelle lesdits faisceaux diffractés tombent sur ledit support d'enregistrement (106), lesdites première et seconde parties étant sensiblement ou à peu près opposées l'une à l'autre afin que ledit faisceau laser et lesdits faisceaux diffractés tombent sur lesdites première et seconde parties en sens sensiblement inverse.

# FIG. I PRIOR ART

# FIG. 2 PRIOR ART

CASE-TEMPERATURE-
DEPENDENCY OF EMISSION
WAVELENGTH

# F I G. 3

# F I G. 4

FIG. 5

FIG. 6 (A)

FIG. 6 (B)

FIG. 6 (C)

FIG. 7

FIG. 8

FIG. 9

# FIG. 10 (A)

# FIG. 10 (B)

# FIG. 11

# FIG. 12 (A)

# FIG. 12 (B)

# FIG. 13 (A)

# FIG. 13 (B)

# FIG. 14

# FIG. 18

EP 0 391 278 B1

# FIG. 15 (A)

# FIG. 15 (B)

32

# FIG. 16

# FIG. 17

FIG. 19

FIG. 20

# FIG. 21

# FIG. 22

EP 0 391 278 B1

## FIG. 23

$\lambda = 0.78\mu m$

$a = 2.0\mu m$

## FIG. 24

# FIG. 25

MOTOR DRIVER 112

CONTROL CIRCUIT 111

VELOCITY DETECTION CIRCUIT 110

106  100  101  102  105  104  103

EP 0 391 278 B1

# FIG. 26

# FIG. 27 (A)

# FIG. 27 (B)